(19) Europäisches Patentamt

European Patent Office

Office européen des brevets

(11) EP 1 154 358 A2

(12) EUROPEAN PATENT APPLICATION

(43) Date of publication:
14.11.2001 Bulletin 2001/46

(51) Int Cl.⁷: G06F 17/30

(21) Application number: 01304263.5

(22) Date of filing: 14.05.2001

(84) Designated Contracting States:
AT BE CH CY DE DK ES FI FR GB GR IE IT LI LU MC NL PT SE TR
Designated Extension States:
AL LT LV MK RO SI

(30) Priority: 12.05.2000 GB 0011543

(71) Applicant: Applied Psychology Research Limited
London NW1 2DX (GB)

(72) Inventors:
• Brown, Daniel
London NW6 2NT (GB)

• Janes, Benjamin Anthony
Surrey, Richmond TW9 2JJ (GB)
• Steele, Murray
London NW2 3RB (GB)
• Cooper, Richard James
London E11 4BH (GB)

(74) Representative: Collins, John David
Marks & Clerk,
57-60 Lincoln's Inn Fields
London WC2A 3LS (GB)

(54) Automatic text classification system

(57) An automatic text classification system is provided which extracts words and word sequences from a text or texts to be analysed. The extracted words and word sequences are compared with training data comprising words and word sequences together with a measure of probability with respect to the plurality of qualities. Each of the plurality of qualities may be represented by an axis whose two end points correspond to mutually exclusive characteristics. Based on the comparison, the texts to be analysed are then classified in terms of the plurality of qualities. In addition, a fuzzy logic retrieval system and a system for generating the training data are provided.

Fig 1

**Description**

The present invention relates to an automatic text classification system, and more specifically to a system for automatically classifying texts in terms of each of a plurality of qualities in a manner such that the classified texts can be automatically retrieved based on a specified one or more of the plurality of qualities. The invention also relates to a retrieval system using the plurality of qualities.

A variety of methods are known for automatically classifying and/or analysing text, including keyword searching, collaborative filtering, and natural language parsing.

Keyword searching methods operate by simply looking for one or more keywords in a text and then classifying the text based on the occurrence (or non-occurrence) of the keywords. Keyword searching methods, however, suffer from the drawbacks that the main concept of a given text may be unrelated to the keywords being searched, and/or that a particularly relevant text may not contain the keywords being searched.

Collaborative filtering methods work by attempting to make recommendations and/or classifications based on matching overlapping results. For example, if a collaborative filtering system were used to analyse a series of questionnaires asking people to name their favourite musicians, the system would analyse the questionnaires by looking for an overlap in one or more of the musicians named in respective questionnaires. If an overlap were found between two questionnaires, the other musicians named by the author of the first questionnaire would be recommended to the author of the second questionnaire, and vice versa. The drawback of collaborative filtering, however, is that it assumes that people's tastes that are similar in one respect are also similar in other respects. That is, collaborative filtering methods fail to take into account the underlying qualities that define people's tastes.

Natural language parsing methods operate by performing semantic or lexical analysis based on rules of grammar and lexicons. These methods are however very dependant on the chosen grammar rules and can be computationally intensive.

The above described drawbacks of keyword searching, collaborative filtering, and natural language parsing have created a need for more accurate and more meaningful text classification methods.

Recently Bayesian inference methods have been discovered which uses statistical inference to classify text.

The system identifies key concepts based on a statistical probability analysis of the frequency and relationships of terms in a text that give the text meaning. If the system was used to analyse a textual film synopsis, the extracted key concept would be films, and the film might even be classified into a predefined category such as comedy, romance, action/adventure or science fiction. However, current technology would fail to identify whether the text relates to, for example, a happy or sad film, a funny or serious film, a beautiful or repulsive film, a tame or sexy film, and/or a weird or conventional film and how much each of these applies, e.g. a little, slightly, fairly, very or extremely. In this connection, it is pointed out that a romantic film, for example, can be each of happy or sad, funny or serious, beautiful or repulsive, tame or sexy, and weird or conventional. Accordingly, if a user were to access a database of textual film synopses classified using current technology, the user would only be able to search for a desired film within the static, predefined categories into which the films were classified. Thus, if a user wanted to find a film that is each of, for example, very happy, slightly funny, a little repulsive, extremely sexy and fairly weird, current Bayesian inference technology would be of little help.

US patent number 5781879 discloses a system for the semantic analysis and modification of information in the form of text. A predetermined lexicon has scores for lexical units (words or phrases) for various categories. Each lexical unit has meaning and semantic content of it's own. The lexicon is used to lookup and accumulate an aggregate score for text for each category. A user is able to modify the text to modify the semantic content of the text by referring to the aggregate scores and trying to modify them to preferred values by replacing lexical units in the text with lexical units having different scores for the categories. This system requires a predetermined lexicon having predetermined scores for lexical units for the categories. Each category is given a discrete score and a score is assigned for each category only for individual lexical units. Thus the accumulated score is accumulated using only discrete values for single lexical units and does not provide a system that uses rich semantic information in the text and in training texts.

A retrieval system is disclosed in co pending UK patent application number 0002179.0, European patent application number 00310365.2 and US application serial number 09/696,355, the disclosure of which is hereby incorporated by reference, for retrieving information using user input values for subjective categories. There is thus a need for a system for automatically classifying information according to such categories.

It is an object of the present invention to provide a system and method for automatically classifying texts in terms of each of a plurality of qualities that are determined based on a statistical analysis of the frequency and relationships of words in the text in relation to training texts.

It is also an object of the present invention to provide a system and method for automatically classifying texts in terms of each of a plurality of qualities by comparing strings of lexical units with stored strings of lexical units having scores for each quality.

It is also an object of the present invention to provide a system and method for automatically classifying texts

# EP 1 154 358 A2

in a manner such that the classified texts can be automatically retrieved using a "fuzzy logic" retrieval system capable of identifying a best match based on a specified one or more of a plurality of qualities.

According to a first aspect the present invention provides a system and method for generating classification data for text, the method comprising: identifying semantic content bearing lexical units in data representing the text to be classified; determining sequences of the identified lexical units; and determining means for determining classification data as a score for the text to be classified with respect to each of a plurality of qualities by comparing the determined sequences of the identified lexical units with stored sequences of lexical units for training texts having scores associated therewith for a plurality of qualities.

This aspect of the present invention enables more semantic information to be included in the classification because of the use of sequences of lexical units.

In one embodiment of the present invention, the lexical units comprise word stems for non common words. Sequences start at non common, non modifying words and comprise preceding words. Preceding words can comprise modifying words.

In this aspect of the present invention any number of sequences can be used e.g. sequences of 2, 3, 4 or 5 word stems. In a preferred embodiment the sequences comprise a plurality of sequences starting at the same word e.g. the word itself, the word and a preceding word (a sequence of 2) and the word, a preceding word, and a word preceding the preceding word (a sequence of 3).

Another aspect of the present invention provides a system and method of generating classification data for text. The method comprising: (i) identifying semantic content bearing lexical units in data representing the text to be classified; (ii) determining classification data as a score for the text to be classified with respect to each of a plurality of qualities by comparing the identified lexical units with stored lexical units having a distribution of lexical scores associated therewith for each of a plurality of qualities.

Thus in this aspect of the recent invention the classification system does not simply use a score for each quality but instead a distribution of scores. This makes an allowance for the possibility of words appearing in training texts that relate to different scores for a quality. The training texts enable a distribution of scores for the words and sequences of words to be built up. This provides a more accurate classification system than one that uses a single score for a quality for words.

In one embodiment the score for the text to be classified is determined by statistical analysis of the result of the comparison.

In another embodiment the method includes determining sequences of the identified lexical units; wherein the score is determined by comparing the determined sequences of the identified lexical units with stored sequences of lexical units for training texts having score distributions associated therewith for the plurality of qualities.

Another aspect of the present invention provides an automatic text classification system comprising: means for extracting word stems and word stem sequences from data representing a text to be classified; means for calculating a probability value for the text to be classified with respect to each of a plurality of qualities based on a correlation between (i) the extracted word stems and word stem sequences and (ii) predetermined training data.

Another aspect of the present invention provides a system for producing training data comprising: means for extracting word stems and word stem sequences from each of a plurality of training texts that have been pre-classified with respect to each of a plurality of qualities; and means for calculating a distribution value of each extracted word stem and word stem sequence in each training text with respect to each of the plurality of qualities.

A further aspect of the present invention provides a retrieval system comprising: means for accessing a data store comprising a plurality of word stems and word stem sequences that have been extracted from a plurality of texts, a plurality of identifiers associating each word stem and word stem sequence with at least one of the plurality of texts, and correlation data between (i) each word stem and word stem sequence and (ii) each of a plurality of qualities in terms of which the plurality of texts have been classified; means for receiving user preference data in terms of at least one of the plurality of qualities; means for identifying word stems and word stem sequences corresponding to the user preference data based on the correlation data stored in the data store using fuzzy logic; and means for identifying at least one of the plurality of texts that best matches the user preference data based on the identified word stems and word stem sequences and the plurality of identifiers stored in the data store.

Any aspects of the present invention briefly described hereinabove can be used in combination with any other aspect.

The present invention can be implemented on any suitable processing apparatus that can be dedicated hardware, dedicated hardware and programmed hardware, or programmed hardware. The present invention thus encompasses computer programs for supply to a processing apparatus to control it to carry out the method and to be configures as the system. The computer programs can be supplied on any suitable carrier medium, such as a transient carrier medium e.g. an electrical, optical, microwave or radio frequency signal, or a storage medium e.g. a floppy disk, hard disk, CD ROM, or solid state device. For example, the computer program can be supplied by downloading it over a computer network such as the Internet.

3

Embodiments of the present invention will now be described with reference to the accompanying drawings, in which:

Figure 1 is a schematic diagram of the training system for generating training data in accordance with an embodiment of the present invention;
Figure 2 shows examples of classification axes used according to an embodiment of the present invention;
Figure 3 shows a preferred distribution of the training data produced from the training texts;
Figure 4a is a flow diagram of an automatic classification method in accordance with an embodiment of the present invention;
Figures 4b and 4c are flow diagrams of the step for determining the scores for each word in the method of the flow diagram of figure 4a;
Figure 5 is a schematic representation of the result of the classification process for each of a plurality of training texts;
Figure 6 is a flow diagram of the word stem and word stem sequence identification process according to one embodiment of the present invention;
Figure 7 is a schematic representation of training data that is generated by the textual analysis process;
Figure 8 is a flow diagram of a process for adding axis names and synonyms into the training data in accordance with an embodiment of the present invention;
Figure 9 is a flow diagram of a process for adding synonyms of prominent words into the training data in accordance with an embodiment of the present invention;
Figure 10 is a schematic diagram of a classification system according to one embodiment of the present invention;
Figure 11 is a flow diagram of a feedback process for improving the training data in accordance with one embodiment of the present invention;
Figure 12 is a flow diagram of the split-merge-compare algorithm used in the feedback process of figure 11;
Figure 13 is a diagram of a hierarchical classification structure in accordance with one embodiment of the present invention;
Figure 14 shows an example of a graphical user interface of a "fuzzy logic" retrieval system for retrieving a classified text based on user specified values along the classification axes; and
Figure 15 shows a block schematic diagram of an embodiment of a retrieval system according to one aspect of the present invention.

The classification system according to an embodiment of the present invention comprises two aspects: a training component and a classification component. Before describing the training component and classification component in detail, a broad overview and some specific features of the embodiment of the present invention will first be described.

Firstly, underlying both the training and classification aspects of the embodiment of the present invention is a multiple-word analysis technique for analysing text to extract therefrom single words ("singles"), and multi-word sequences such as word pairs ("doubles"), three-word sequences ("triples") and so on. To take a very simple example, a text describing a film may describe the film as "exciting". The presence of such a word will generally have an effect on the classification of the associated film. However, if the word "very" precedes the word "exciting" then it would be expected that this pair of words (double) would have a more profound effect on the classification of the underlying film. The process may be extended to three-word sequences (triples), for example "very very exciting". The following description relates to analysis of doubles and triples only for ease of explanation, the invention also applies to quadruples, quintuples and so on.

In the embodiments of the present invention described below, words such as "exciting" or "happy" which have a clear and independent meaning are referred to as main stem words. These words are semantic content bearing lexical units. Words that do not have an independent meaning are referred to as common words. Examples of common words are "the" and "a". In the English language, there are 258 common words. These are given in table 1 below.

Table 1

| Common Words in the English language | | | | | | |
|---|---|---|---|---|---|---|
| a | children | had | look | over | that | which |
| about | come | hand | looked | own | the | while |
| above | could | hard | made | page | their | white |
| after | country | has | make | paper | them | who |

Table 1   (continued)

| Common Words in the English language | | | | | | |
|---|---|---|---|---|---|---|
| again | day | have | man | part | then | why |
| air | days | he | many | parts | there | will |
| all | did | head | may | people | these | with |
| almost | different | help | me | picture | they | without |
| along | do | her | men | place | things | word |
| also | does | here | might | put | think | words |
| always | don't | high | more | read | this | work |
| an | down | him | most | right | those | world |
| and | each | his | mother | said | thought | would |
| animals | earth | home | Mr. | same | three | write |
| another | end | house | much | saw | through | year |
| any | enough | how | must | say | time | years |
| are | even | I | my | school | times | you |
| around | ever | if | name | second | to | your |
| as | every | important | near | see | together | |
| asked | eyes | in | need | sentence | too | |
| at | far | into | never | set | took | |
| away | father | is | new | she | two | |
| back | feet | it | next | should | under | |
| be | few | its | night | show | until | |
| because | find | just | no | side | up | |
| been | first | keep | not | since | us | |
| before | following | kind | now | small | fuse | |
| began | food | know | number | so | used | |
| being | for | land | of | some | very | |
| below | form | large | off | something | want | |
| between | found | last | often | sometimes | was | |
| big | four | left | old | soon | water | |
| both | from | let | on | sound | way | |
| boy | get | life | once | still | we | |
| boys | give | light | one | story | well | |
| but | go | like | only | study | went | |
| by | going | line | or | such | were | |
| called | good | little | other | take | what | |
| came | got | live | our | tell | when | |
| can | great | long | out | than | where | |

A subset of common words that have no independent meaning but that alter or enhance the meaning of following words are referred to as modifying words. These words can also be considered semantic content bearing lexical units since they modify the meaning of the following words. Examples of modifying words are "very", "many", "not", "highly" and so on. Table 2 below gives a list of the modifying words used in an embodiment of the present invention.

Table 2

| Modifying words in the English language | | |
|---|---|---|
| all | know | take |
| almost | large | think |
| along | last | thought |
| also | light | through |
| always | like | together |
| another | little | under |
| any | live | until |
| around | long | very |
| away | many | where |
| back | may | while |
| before | might | will |
| began | more | without |
| below | most | would |
| between | much | |
| big | must | |
| both | near | |
| different | never | |
| does | new | |
| don't | next | |
| down | no | |
| each | not | |
| enough | often | |
| ever | old | |
| every | once | |
| far | one | |
| few | only | |
| find | other | |
| first | out | |
| following | over | |
| from | right | |
| going | same | |
| good | should | |
| great | since | |
| hard | small | |
| high | some | |

Table 2   (continued)

| Modifying words in the English language | | |
|---|---|---|
| important | something | |
| into | sometimes | |
| just | soon | |
| keep | still | |
| kind | such | |

In this embodiment of the present invention, texts are classified in terms of qualities that are represented by classification axes whose end points correspond to mutually exclusive characteristics. In the example of the classification of a film, a description of a film may include words such as "happy", "thrilling", "violent" and so on. One classification approach would be to provide a single numeric score for each of these characteristics. However, it is much preferred to provide axes upon which scores represent two mutually exclusive characteristics. A straightforward example would be a single axis (set of scores) that represents the complete range between happy and sad. In the following examples, a score of between 0 and 10 is used. Consequently, a film whose description obtains a score of 0 on this axis could be expected to be very happy while a film whose description scores 10 can be expected to be very sad.

In the embodiments described below, there is no particular emphasis to be placed on the 11-point score. The lower value of 0 has been chosen to readily comply with computer programming conventions while an 11-point scale provides a good compromise between accuracy of classification and complexity of processing. Nevertheless, it is possible for each axis to comprise only two scores. It is preferred, however, to provide an odd number of scores along the axis so that a middle value (or neutral value) exists. This allows a score to be placed on each axis that is either indicative of one or the other of the mutually exclusive characteristics or neutral. In other words, in the example of the happy-sad axis, an odd number of scores would enable a film to be classified as either happy or sad or as neither particularly happy nor particularly sad.

A number of different axes are provided in the following embodiments so that, for example, a film can be allocated a score for numerous qualities. In addition to happy-sad, these might include loving-hateful, violent-gentle and so on. According to one example, 17 axes can be used. The number of axes will depend on the field to which the invention is applied.

The Training System

The following example uses a Bayesian algorithm but others could readily be used. The training system broadly comprises two parts. First, a classification of a plurality of pre-selected training texts in terms of each of a plurality of qualities and second, an automatic text analysis of each of classified training texts. The object of the training system is to generate an output of singles, doubles and triples of word stems and word stem sequences together with a value on one or more axes to enable classification of subsequently-analysed documents that contain the same words or combinations of words.

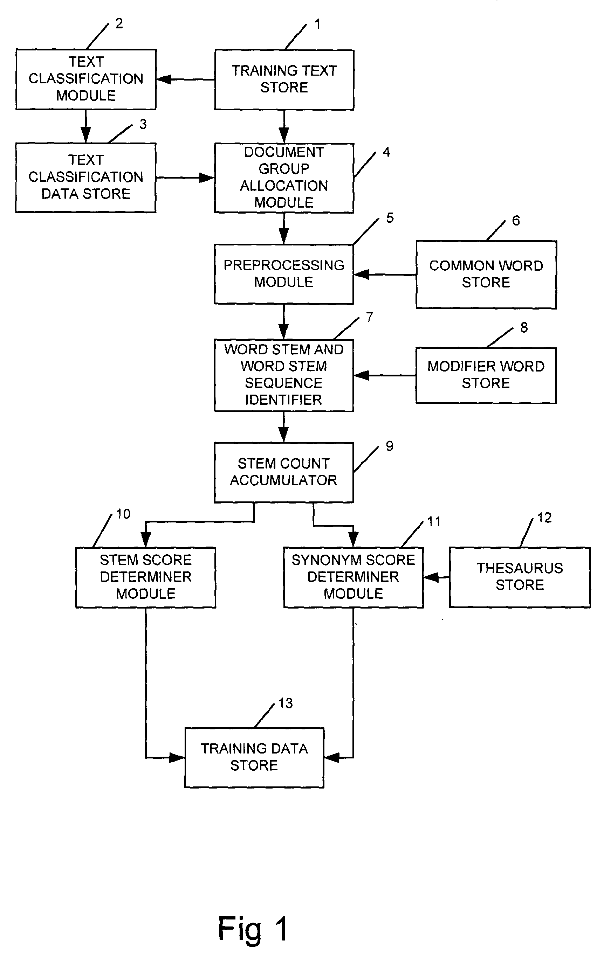

Figure 1 is a schematic diagram of the training system in accordance with an embodiment of the present invention. Training is performed on a set of training texts provided in a training text store 1. Text classification is carried out either manually or using a text classification module 2 to generate text classification data which is stored in text classification data store 3. The texts are allocated to groups by a document group allocation module 4. The texts are then processed in a batch mode. They are pre-processed by a pre-processing module 5 which refers to a common word store 6 containing the words of table 1 to provide words which have semantic content or are modifying words to a word stem an word stem sequence identifier 7 which uses a modifier word store 8 containing the words of table 2. Identified word stems and word stem sequences are input to a stem count accumulator 9 to accumulate counts for the stems. A score determiner module 10 then determines the scores for the stems and sequences using a Bayesian method and the scores are stored as training data in a training data store 13. Also, a synonym score determiner module 11 uses a thesaurus in thesaurus store 12 to identify synonyms of axis words and prominent words and to determine a score for them for storage in the training data store 13.

The system can be implemented by software on any suitable processing apparatus. The various modules described with reference to figure 1 can be implemented as routines in software and the data stores can comprise conventional storage media such as a hard disk, floppy disk, or CD ROM.

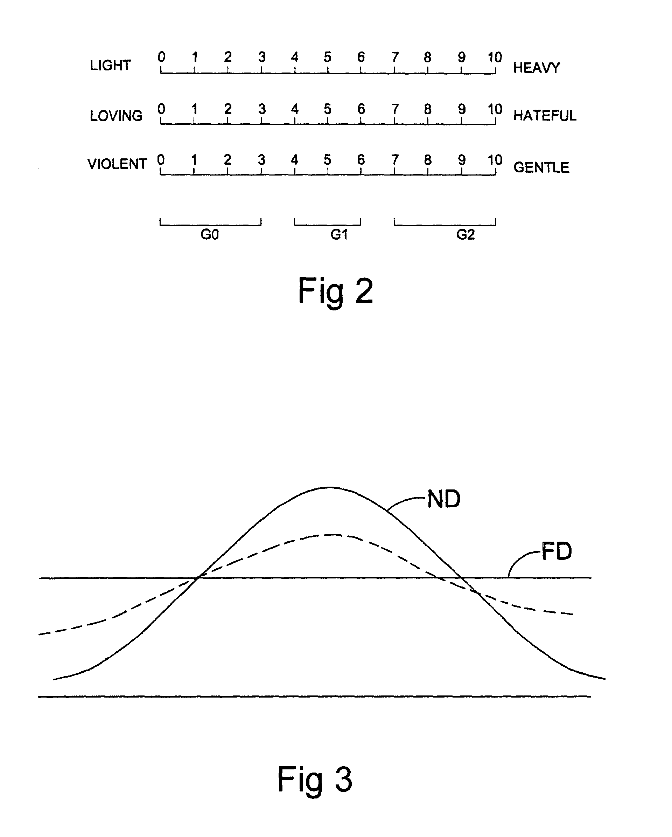

The detailed operation of the system will be described in more detail hereinafter with reference to figures 2 to 9.

Classification of training texts

As a first step, suitable training texts are chosen. These should include both relevant vocabulary and also represent a reasonable distribution of items over a broad range of the relevant qualities. For example, if all of the training texts selected related to horror films, then the training data produced therefrom would probably not be capable of accurately classifying texts relating to romantic, humorous or other films. If the training data output by the training system is found to be skewed, this can be remedied by further training. Each training text preferably contains at least 40 words so as to provide a broad vocabulary for enabling accurate classification. The number of training texts should be in the range of 350 to 1000. It has been found that using approximately 500 training texts provides a good compromise between the amount of work required and the classification accuracy of the subsequently trained system. However, using less training texts has been found not to seriously degrade the performance of the system.

Figure 2 shows three of these axes in pictorial form. Figure 2 also illustrates groups along these axes which will be described further later on. Examples of 17 axes (qualities) are given in table 3 below. Although 17 axes are given in table 3, any number can be used.

Table 3

| Emotional Profile | |
|---|---|
| (1) | Light - Heavy |
| (2) | Loving - Hateful |
| (3) | Violent - Gentle |
| (4) | Happy - Sad |
| (5) | Sexy - Non Sexy |
| (6) | Fearful - Comfortable |
| (7) | Funny - Serious |
| (8) | Surprising - Methodical |
| (9) | Horrifying - Beautiful |
| (10) | Inspirational - Bleak |
| Content Profile | |
| (11) | Historical - Futuristic |
| (12) | Fast paced - Slow paced |
| (13) | Educational - Entertaining |
| (14) | Weird - Conventional |
| (15) | Escapist - Challenging |
| (16) | Short - Long |
| (17) | Intellectual - Easy Viewing |

The classification of the texts can be carried out manually to provide a subjective input in which case, human reviewers read the training texts and allocate for each training text a score between 0 and 10 on each of the 17 axes, for example. Where the training text is regarded as neutral in a particular category, a score of 5 can be allocated. The strength of the non-neutrality of each training text will then be scored subjectively by the reviewer using the other 10 possible scores on the axis. Preferably, the training texts are each provided to a number of different reviewers so as to avoid extreme views providing skewed data. Still further preferably, the work of the human reviewers is moderated by a peer review process.

The training texts are ideally chosen to represent a spread along all of the possible scores along each axis. It has been found that the most advantageous distribution lies between a Bell curve (i.e., normal distribution ND) and a flat-distribution (FD) for each axis. This is shown in Figure 3 where the distribution between ND and FD is shown as a dotted line. As a result, there should be a reasonable quantity of training data relating to each of the possible scores on each axis. While it is preferred that there is a higher amount of training data towards the centre of each axis, the preferred distribution ensures that there are at least some training data relating to the extremes of the axis. Also, while the distribution lying somewhere between a flat distribution and a Bell curve is preferred, it has been found that the system still operates well even when the distribution of the training data differs from this ideal. The feedback process described later on has relevance to this and can be used to compensate for poor training data i.e. training texts that do not provide the preferred distribution.

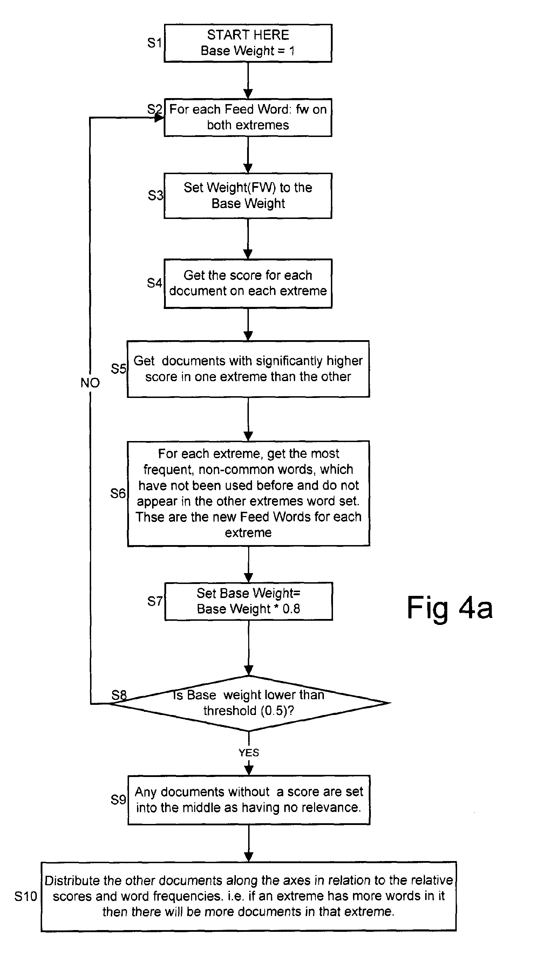

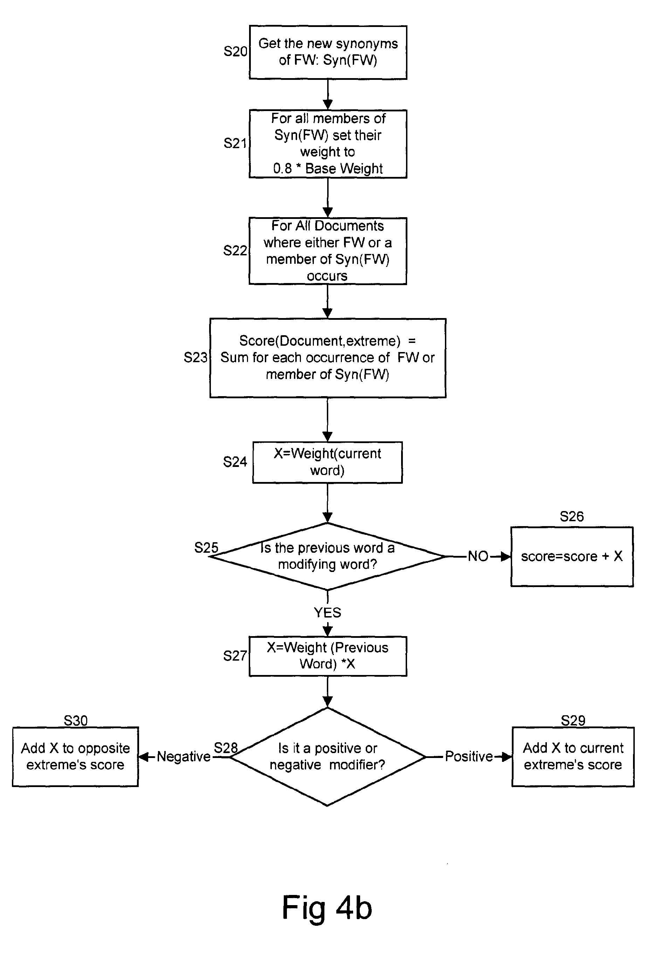

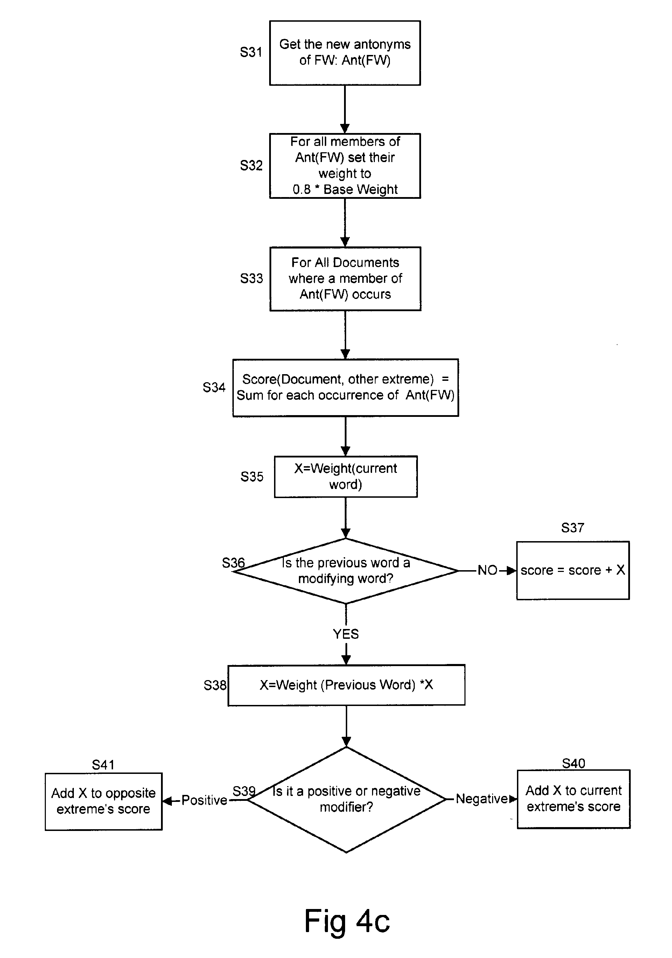

Alternatively to performing manual classification of the training texts, an algorithm can be used to determine scores for texts automatically. Fig 4a, 4b and 4c are flow diagrams of an automated process for the classification of texts. In this process the extremes representing the end points of the axes are used to generate a set of synonyms and antonyms. Words in the training documents are compared to the words for the end points and their synonyms and antonyms and scores are accumulated accordingly. The synonyms and antonyms are then used to find new synonyms and antonyms and the process iterates to accumulate a score for each axis for each document.

In step S1 the process starts and a base weight is set to 1. The process is then carried out for each extreme word as a feed word FW. For example, the axis Happy-Sad has the extremes Happy and Sad. These become the feed words FW (step S2). The weight for the feed word Weight(FW) is then set to the base weight (1 in the first iteration). The score for each document for each feed word is then determined in step S4. The process of step S4 is illustrated in more detail in the flow diagrams of figures 4b and 4c.

Figure 4b illustrates the process when the synonyms for feed words Syn(FW) are determined (step S20). For all of the synonyms found, their Weight is set to 0.8 of the Base Weight (step S21). This reduces the effect of synonyms on the score compared to extreme words. Where the feed word FW or synonyms of the feed word can be found in documents (step S22), for those documents, a score for the document and the extreme is set to the sum of each occurrence of the feed word or the synonym of the feed word (step S23). A variable X is then set to the weight of the current word (step S24). If the previous word was not a modifying word (step S25), in step S26 the score is determined and the previous score for the document for the extreme plus X. If the previous word was a modifying word (step S25), in step S27 the variable X is modified by the weight of the previous word. It is then determined whether the modifier is a positive or negative modifier in step S28. If the modifier is negative e.g. not, the variable X is added to the opposite extreme's score in step S30. If the modifier is positive e.g. very, in step S29, X is added to the current extreme's score.

Figure 4c illustrates the process when the antonyms for feed words Ant(FW) are determined (step S31). For all of the antonyms found, their Weight is set to 0.8 of the Base Weight (step S32). This reduces the effect of antonyms on the score compared to extreme words. Where the feed word FW or antonyms of the feed word can be found in documents (step S33), for those documents, a score for the document and the extreme is set to the sum of each occurrence of the feed word or the antonym of the feed word (step S34). A variable X is then set to the weight of the current word (step S35). If the previous word was not a modifying word (step S36), in step S37 the score is determined and the previous score for the document for the extreme plus X. If the previous word was a modifying word (step S36), in step S38 the variable X is modified by the weight of the previous word. It is then determined whether the modifier is a positive or negative modifier in step S39. If the modifier is positive e.g. not, the variable X is added to the opposite extreme's score in step S41. If the modifier is negative e.g. very, in step S40, X is added to the current extreme's score.

Having now determined the score for each document for each extreme (step S4 in figure 4a), documents with significantly higher scores in one extreme than the other are identified (step S5) and for each extreme the most frequent, non-common words which have not been used before and do not appear in the other extremes word set are identified as the feed words for each extreme for the next iteration (step S6). The Base Weight is then reduced by a factor of 0.8 (step S7) and in step S8 it is determined whether the Base Weight is below a threshold set at 0.5. This is used to set a limit on the number of iterations performed by the algorithm. If the Base Weight is not less than 0.5, The process returns to step S2 to repeat with the new feed words. If the Base Weight has reached 0.5, in step S9 any documents that do not have a score are set to a mid score for the axis. The scores along the axes for the other documents are determined using their relative determined scores and word frequencies (step S10).

Thus the automated classification process operates to determined scores for axes for documents based on extreme words and their synonyms and antonyms that are determined on an iterative basis. This avoids human subject input that may give inaccurate retrieval result when the determined classifications are used to form reference data for retrieval because it only uses the semantic information in the text of the document and not external influences e.g. preconceptions or assumptions.

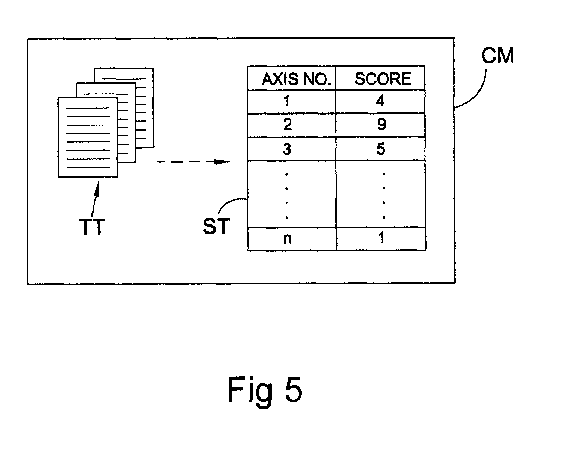

The result of the classification process is a series of scores (i.e., one on each axis) for each of the training texts. The scores allocated on each axis for each document are stored electronically and are indexed (using any suitable data storage technique) to the respective training texts. The output is illustrated schematically in Figure 5. A plurality of training texts TT are stored in a computer memory CM such as a hard disk drive. Associated with each Training Text (illustrated by dotted line) is a table or Score Table ST. The Score Table shown comprises two columns, namely an axis number and a score for each axis. Well known memory management techniques can be used to efficiently store the information. For example, a document number could simply be followed by n scores in a data array, thereby eliminating the storage of the axis identification numbers.

Text analysis of classified training texts

The training system has as its object to establish a relationship between extracted word stems and word stem sequences with the scores provided by the classification procedure. The relationship comprises, for each axis, for groups of values each axis, the word stems and word stem sequences and their scores obtained by accumulating their occurrence in the training texts. There are basically two parts to this process: group allocation and textual analysis.

The training documents are initially grouped according to their classification determined in the classification process. In this embodiment, the group G0 comprises the scores 0 to 3 inclusive, the group G1 comprises the scores 4, 5 and 6, and the group G2 comprises the scores 7-10 inclusive. The group G1 is consequently a "neutral" group while the other two are indicative of more extreme values on each axis. These are shown in Figure 2. The training documents in each group are then processed as a group to generate word stem and word stem sequence scores for the groups.

Each training document is pre-processed and then analysed on a sentence by sentence basis to generate singles, doubles and triples. The pre-processing removes insignificant information (i.e. removes words which have no significant semantic content) and eases subsequent processing. The pre-processing can comprises any of the following steps:

1. Conversion of all of the text into lower case or upper case characters.
2. Removal of any apostrophes and any letters after those apostrophes.
3. Removal of control characters.
4. Convert Latin-1 ASCII characters to their standard ASCII equivalents.
5. Delete numbers.
6. Process punctuation using one of:

    a. Remove all punctuation
    b. Process punctuation, putting XML tags around punctuation marks to identify them.
    c. A combination of a. and b.

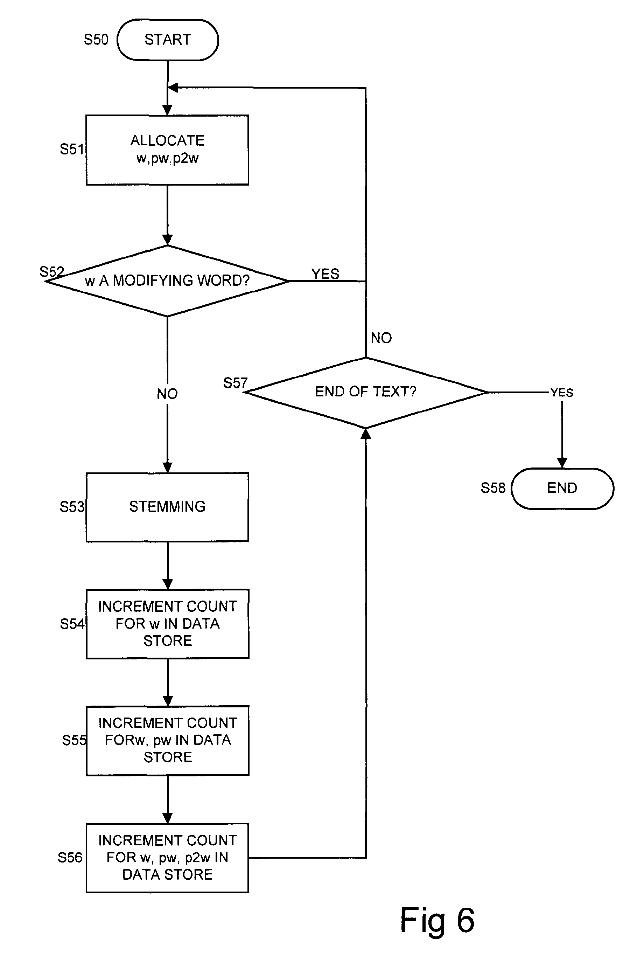

The textual analysis is performed on the pre-processed data using an algorithm as illustrated in the flow chart of Figure 6. Three variables, namely "w" (corresponding to single word stems), "pw" (corresponding to a previous word) and "p2w" (corresponding to a previous previous word ), are identified. More specifically, the system works through the text from start to finish identifying words from the text to these variables and, where appropriate, incrementing the count for singles (w only), doubles (pw followed by w) and triples (p2w followed by pw followed by w). The count is incremented for the word stem or word stem sequence for each axis for each region along the axis i.e. for each group.

The process of figure 6 is carried out for each document in each group. In step S50 in figure 6, the word stem and word stem sequence identification process starts. In step S51, the first word of the sentence is allocated to the variable w. Because there is no word preceding the first word, the variables pw and p2w are both allocated to "NAW" which means "not a word".

In the next step S52 whether or not "w" is a modifying word is determined. (As described hereinabove, a modifying word is a word which is too common to indicate a particular characteristic but which plays an important role as a preceding word (pw or p2w) - good examples of modifying words are "very" and "not".) Where "w" is such a modifying word the further steps of the analysis procedure are bypassed and the process returns to step S51 where the next word is allocated to w, the modifying word is allocated to pw and NAW is allocated to p2w. It is then determined whether the updated word w is a modifying word (step S52). If so, then the remaining steps are bypassed and the contents of w, pw and p2w are updated again. If w is not a modifying word then the word w is passed to a stemming algorithm (one well known example is the Porter stemming algorithm) in order to convert the word to its stem or root. Consequently, the words "loveable", "love" and "loving" will all stem to "lov". This ensures that words indicating a common concept are grouped together for further processing regardless of tense and whether they are nouns, verbs, adjectives and so on.

The word stem w is then added to the data store if it is not already stored with a count of 1 indexed by the group. Where the word stem w has occurred previously in the document, then a count of the number of occurrences for the group is increased (step S54). The word stem w is stored on its own and with its two previous words, pw and p2w (i.e. as a single, double and triple) in the data store to accumulate a count for the occurrence of the double w and pw (step S55) and the occurrence of the triple w, pw and p2w (step S56). If the end of the document is detected (step S57), the process is complete for the document (step S58). If not the process returns to step S51 to reallocate w as pw, pw as p2w and to allocate the next word stem in a sentence as w.

It is worth noting at this point that the designation of a variable pw, or p2w as "NAW" is significant and doubles or triples which include NAW are important and should not be discarded or stored by the system only as a single or a double. The reason is that this means that the word stem or word stem and first previous word (where p2w equals NAW) occur at the start of a sentence where, generally speaking, more significant concepts are to be found.

The following example illustrates the procedure on an actual sentence:
"We saw a clown in the park on a sunny day."

The pre-processing step will remove the punctuation and remove the common non modifying words (from table 1) we, saw, a, in, the, on, a, and day, leaving:

clown park sunny

The variables are allocated as follows: w = "clown", pw= "NAW", p2w= "NAW" (step S51). The system compares the variable w with its list of modifying words and determines that it is not a modifying word (step S52). The word "clown" is therefore applied to the stemming algorithm and is converted to its stem "clown". At this point, the following information is added to the data store:

| | |
|---|---|
| w = "clown" | occurrence = 1 |
| w ="clown", pw = "NAW" | occurrence = 1 |
| w = "clown", pw = "NAW", p2w = "NAW | occurrence = 1 |

If the single (i.e., w), the double (i.e. pw and w) or the triple (i.e., p2w and pw and w) has already occurred in the training text, then it will not be added afresh but rather the number of occurrences will be increased by one.

The variables are then updated to w = "park", pw = "clown", p2w = "NAW". The word "park" is nota modifying word and so it is applied to the stemming algorithm. The following information is then added to the data store:

| | |
|---|---|
| w = "park" | occurrence = 1 |
| w = "park", pw= "clown" | occurrence = 1 |
| w = "park", pw= "clown", p2w= "NAW" | occurrence = 1 |

The variables are updated to w = "sunny", pw = "park", p2w = "clown". Comparison with the databases of modifying words determines that "sunny" is a stem-word. It is consequently applied to the stemming algorithm and converted to "sunni". The following information is then added to the data store:

| | |
|---|---|
| w = "sunni" | occurrence = 1 |
| w = "sunni", pw= "park" | occurrence = 1 |
| w = "sunni", pw= "park", p2w= "clown" | occurrence = 1 |

The processing of the exemplary sentence is now complete, and the relevant information is then stored in the data store. Further sentences will be processed in the same manner.

Each word stem and word stem sequence identified in the above-described procedure is stored in association with the appropriate group, G0, G1, G2.

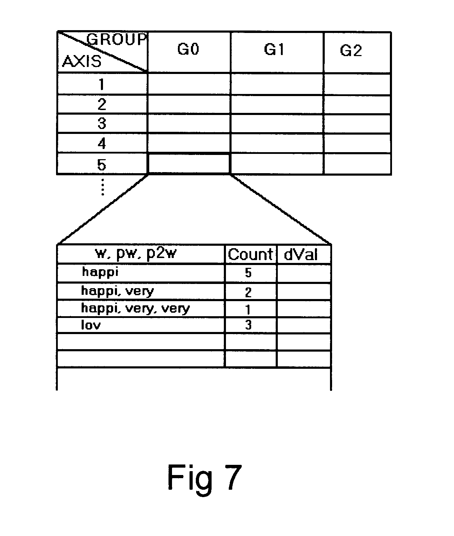

Figure 7 schematically illustrates the result of the accumulation of word stem and word stem sequence counts. In this example the stem "happi" occurred five times during analysis of training document. The training document was allocated a score of 2 on the Happy-Sad axis by the classification process. The word stem "happi" is thus stored in group G0 on the Happy-Sad axis. This applies to all the other axes with respect to the group on each axis into which the text has been classified.

Some anomalies may be generated during this procedure. Such anomalies may be caused by words being used in an unusual context or by errors in the preparation of the original document. This is why a large number of training texts are preferably used to produce the training data.

To return to the example of the Happy-Sad axis, the stem "happi" will be expected to occur most frequently in group G0 of this axis. After analysis of all of the training texts the stem "happi" might have the following scores (number of occurrences):

GO = 50, G1 = 20, G2 = 12.

Thus, when this word stem "happi" is found in a new text the training data can be used to provide an indication that the document should be placed in group G0 on the Happy-Sad axis. The scores are thus distributed across the groups.

The next step in the process is the determination of a score for each word stem and word stem sequence. This is carried out on a statistical basis. One example of a calculation of the likelihood or probability of occurrence of each of the stem words, doubles and triples will now be described. It should be noted that, while a mathematical probability is given in the following examples, this need not be the case in practice. The term probability should be read to encompass any score indicative of a likelihood of occurrence.

For each word stem 'w':

$$dVal(w)= \frac{(1 + \text{number of occurrences } (w))}{(\text{Number of distinct stems on axis: } a + \text{number of words in group: } g)}$$

The number of occurrences of the word w in the training data therefore increases the value of dVal(w). However, by placing the number of word stems on the particular axis and the number of words in the group in which the word stem occurs in the denominator, dVal represents the likelihood or frequency of occurrence of the word stem in the training data. Placing a 1 in the numerator ensures that dVal(w) will always have a finite value even when the number of occurrences is zero. This ensures that dVal can be multiplied meaningfully.

Then, for each two-word sequence (double) 'w', 'pw':

$$\text{sequence value } dVal \ (w, pw)= \frac{(\text{number of occurrences } (w, pw) * dVal(w))}{\text{Total number of 'pw' occurrences for this 'w'}}$$

The dVal value for the double is therefore increased by the number of times it occurs and by the frequency of occurrence of the basic word-stem w. The dVal value is moderated, however, by the number of pw occurrences for the stem word w in the denominator. Consequently, a double that includes a stem word that occurs with a large number of different previous words will obtain a lower value of dVal than a double containing a stem word that rarely occurs with a previous word.

For the triple word sequence 'w', 'pw', 'p2w':

$$dVal(w,pw,p2w)= \frac{(\text{number of occurrences } (w, pw, p2w) * dVal \ (w))}{\text{Total number of 'p2w' occurrences for this 'pw'}}$$

This equation is analogous to the previous one but using the second previous word p2w rather than the previous word pw. Consequently, a triple including a word stem that occurs with a lot of different second previous words will obtain a lower score than one that seldom occurs with second previous words. This equation can be used by analogy to process third previous words, fourth previous words and so on.

The process is repeated for all of the main word stems in the training texts as well as all of the multi-word stem sequences. Clearly there is a lot of room for modification of this procedure for example by deletion of words which occur very infrequently within the training data, or by increasing the number of groups, or by modifying the scores in each group and so on.

Additionally, specific word stems and multi-word stem sequences can be placed in the database or the dVal for word stems and word stem sequences that exist in the training data but whose frequency is regarded as artificially low or high can be modified. Important words that might be absent from the training data are "morose" and "voluptuous".

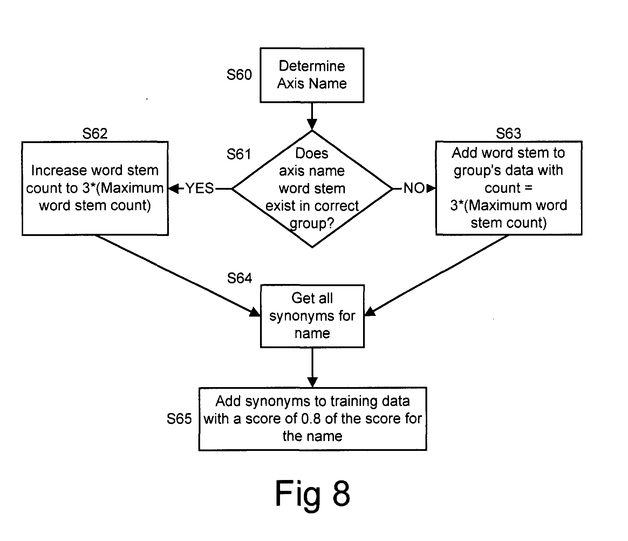

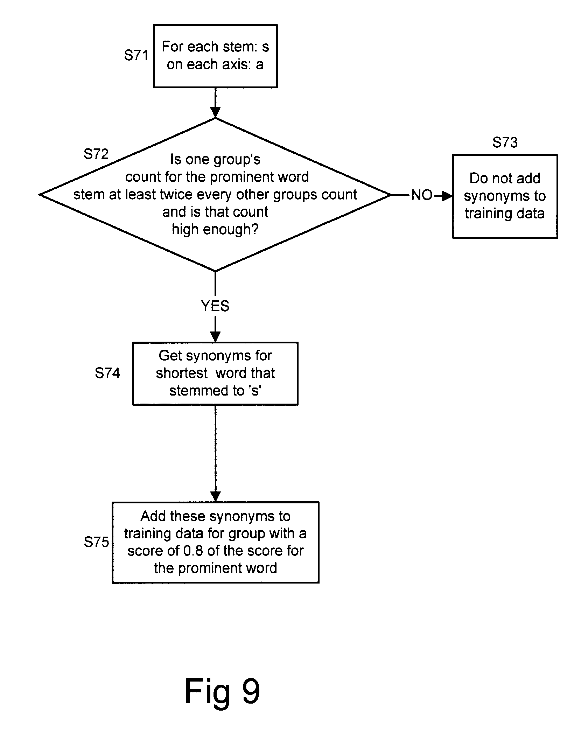

Additional data that is added to the training data stored in the data store is synonym word stem scores. Synonyms can be added for the axis names or for prominent words i.e. for word stems for which the count is significantly higher than for other word stems. The process for this will now be described with reference to the flow diagrams of figures 8 and 9.

Figure 8 is a flow diagram of a process for adding counts for axis names and synonyms to the training data. Index names are first identified (step S60). It is then determined whether the axis name word stem exists in the correct group e.g. the axis word happy in the group G0 representing the extreme group in the happy-sad axis (step S61). If not, in step S63, the word stem for the axis name is added to the group with a count of 3 times the highest word stem count in the axis. If the word stem for the axis name does exist, in step S62 it's count is increased to 3 times the maximum word stem count for the axis. Thus the word stem for the axis name is added to the correct group with a high count. Synonyms for the axis name are then determined in step S64 and word stems for these are added to the training data with scores that are 80% of the score for the highest word stem count for the axis name (step S65).

Figure 9 is a flow diagram of a process for adding counts for synonyms for prominent words in groups in the determined training data. In step S71 the process is implemented for each word stem, for each group and for each axis (step S71). It is determined whether the word stem is prominent by determining whether the count is at least twice the count for other groups and if it is above a threshold (step S72). If not, no synonyms are added (step S73). If so, synonyms for the shortest word that gave rise to the word stem are determined in step S74. In the data store, with each word stem, the shortest word which gave rise to the word stem is stored to enable this function e.g. the word stem danger could have arisen from the words danger, dangerous, or dangerously. The synonyms are then added to the training data with a count of 80% of the count for the prominent word.

Generation of the training data is now complete. It can be stored in a binary tree format to reduce the searching overhead. The actual format of a suitable data store structure will be selected readily by the skilled person in dependence on the application.

The Classification System

The purpose of the classification system is to apply the training data generated by the training system to a new text or texts that have yet to be classified. While the following description assumes that just one new text is being classified the system is equally applicable to classification of a large number of texts or block of texts at the same time. Where a block of texts is being processed this is done, preferably, axis by axis. In other words, axis 1 (e.g. Light-Heavy) is processed for all of the new texts and then processing proceeds to axis 2 and so on.

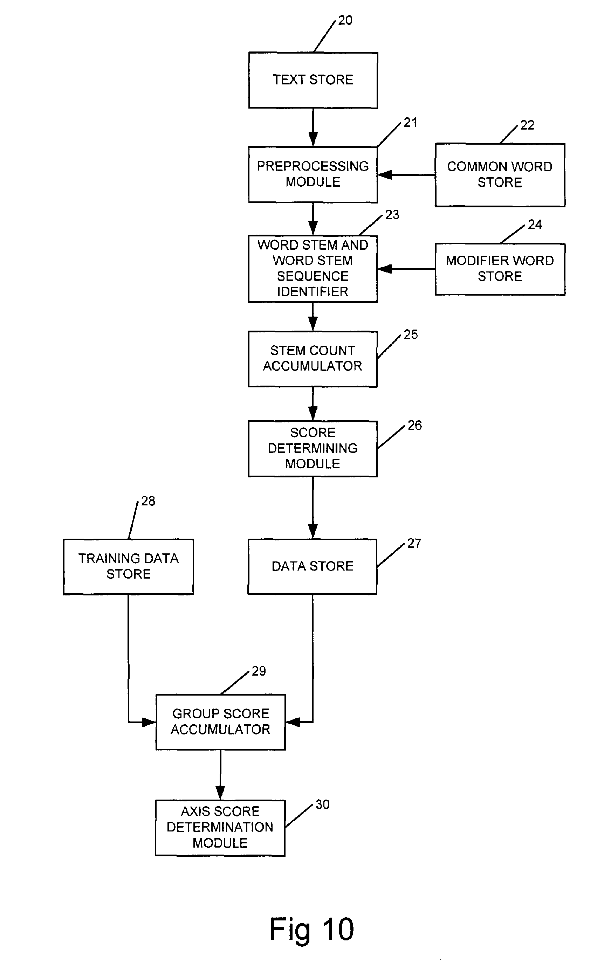

The classification system in schematically illustrated in figure 10. A text store 20 stores input texts to be classified. The texts are processed in the same way as the training texts. A pre-processing module 21 uses a common word store 22 to output only modifying words and words which have significant semantic meaning to a word stem and word stem sequence identifier 23 which uses a modifier word store 24 to identify word stems and word stem sequences. Counts for the word stems and word stem sequences are accumulated by accumulator 25. Scores for the word stems and the word stem sequences are determined by a score determining module 26. The scores are stored in data store 27 and are read together with training data from the training data store 28 by a group score accumulator 29. The group scores are then processed by an axis score determination module 30 to determine the scores for the input text for each axis and thereby classify the text.

The classification system can be implemented by software on any suitable processing apparatus. The various modules described with reference to figure 10 can be implemented as routines in software and the data stores can comprise conventional storage media such as a hard disk, floppy disk, or CD ROM.

The procedure carried out by the system will now be described in more detail. The procedure comprises the following steps conducted for each axis:

1. Obtain the training data that comprises three groups of data for the given axis. Each group will include a number of stem words, doubles and triples together with a number of occurrences (and/or a frequency indication such as dVal). If we consider the Happy-Sad axis then we can expect the stem "happi" to occur quite frequently in group G0 while the stem "sad" will occur quite frequently in the group G2. The double "not happi" would be likely to occur more frequently in Group G2.

2. The text is processed in the same way as described above for the training system, namely the pre-processing is applied and the stem words, doubles and triples are identified in the same manner. It is worth noting here that the procedure might be simplified by simply searching the new text for all the stem-words, doubles and triples stored in the training data. However, by applying exactly the same procedure as was used above a considerable economy of programming can be achieved.

The training process provides data (e.g. in the form of a binary tree) containing all of the stem words, doubles and triples from the training data together with their respective dVal values for a particular axis. The process described above provides data containing all of the triples, doubles and word stems found in the new text to be classified.

3. The training data is then searched for the occurrence of the first triple found in the new text. If it is present in the training data then the dVal for that triple is stored in a counter that logs the cumulative dVal values for each of the three groups in respect of that particular new text. In order to ensure that occurrence of triples has a greater effect than occurrence of doubles and word stems, the occurrence of a triples is preferably weighted. Thus the dVal value for the triple is multiplied (in this embodiment) by 24 before being added to the cumulative counter. Other values of weighting constant may be used.

If a match for the triple has been found then the processing continues to analyse further triples, doubles and word stems found in the new text.

If no match is found then the second previous word of the triple is discarded and a comparison is made between the remaining double and the training data. If a match is found then the dVal value for that double is stored in the cumulative counter for the relevant group for the new document (on the relevant axis, of course). In order to ensure that the occurrence of doubles has a greater effect on the cumulative dVal value for the new document the dVal value is multiplied (in this embodiment) by 8 before being added to the cumulative counter. Other values of weighting constant may be used.

If a match for the double is found then processing continues to analyse further triples, doubles and word stems found in the new text.

If no match is found for the double then the previous word is discarded and the search of the training data is repeated using only the word stem w. If a match is found then the relevant value of dVal is added to the cumulative counter for the group in which the word w is found. If no match is found for the word stem, then a dVal value having 1 in the numerator is recorded in a similar manner for the training algorithm.

Whether or not a match is found for the word stem, the processing continues to analyse the remainder of the new text. On reaching the end of the new text, processing continues by loading the training data for the next axis and repeating the comparisons. Once the new text has been fully analysed, a cumulative score of dVals will be stored for each group on each axis for the new text.

One example of the calculation performed is as follows:

For each axis, calculate the probability of the new text belonging to each group on the axis:

$$p(\text{Group}\mid \text{td \& t}) = \prod_{AllWords \text{ in t}}^{w} p(w \mid pw, p2\,w, group)$$

This relates the probability of the text being allocated to a particular group on each axis on the basis of the training data, td and the text being classified, t. This is performed by multiplying (for every word) the probabilities of that word occurring in a document that is allocated to that group (based on the training data).

Of course, other formulae could be used in making the calculation

One example of how the value p(w |pw, p2w, group) is calculated is shown below

☐ if w is not a common word

does 'w', 'pw', 'p2w' exist in the group's training data

yes -> p(w | pw, p2w, group)=

dVal (w, pw, p2w) * TripleConstant* $\sum$(occurrences of 'w'. 'pw', 'p2w' in 't')

no -> does 'w', 'pw' exist in the group's training data

➢    yes -> p(w | pw, p2w, group)=

dVal (w, pw) * PairConstant* $\sum$(occurrences of 'w'. 'pw', in 't')

➢    no -> does w exist in group's training data

yes -> p(w) =    dVal (w) * $\sum$(occurrences of 'w' in 't'

no -> p(w)

$$= \frac{1}{[\text{distinct stems in training axis} + \text{number of words in training group}]}$$

The two constants, TripleConstant and PairConstant are worked out using the following equation: number of words in sequence*$2^{\text{number of words in sequence}}$ (these are, of course, only examples, and other values of weighting factor may be used.)

Get largest p(Group) - The largest probability is taken and along with the group number and the 'id' of the text is stored for later processing by axis score determination module.

The process so far provides scores for each group along each axis. The groups are used to make the process less reliant on good training texts. Individual scores must then be determined for each axis. This can be achieved using a spread function or using a statistical mean determination.

Considering first the spread function, the spread function is applied once a large number of texts are analysed using the technique above. To use the spread function it is assumed that the texts will represent all of the possible allocations of scores (0 to 11) on each of the axes. Each group is treated separately.

If one axis is considered, the classification algorithm will provide a probability value for each group on that axis for each text. This gives an indication of the likelihood that a given text should be classified in that group. If the likelihood is high then this will be reflected in the score given to that text. For example, on the Happy-Sad axis, a very high probability that a text should be in Group G0 would tend to indicate a very happy text. Consequently, that text should be given a score of 0. On the other hand, if a text has a very high probability that it should be classified in Group G2 then that text should be given a score of 10. If the probability value is lower then the scores can be increased (happy side) or decreased (sad side) as appropriate.

Texts classified in Group G1 are given a score of 5. Consequently, middle-ranking texts are all given a neutral value. Texts classified in Group G0 are given a score of between 0 and 4. Texts classified in Group G2 are given a score of between 6 and 10.

It will be appreciated that some stretching or spreading of the classification has occurred. To actually determine the score a probabilistic approach is taken. Taking the example of the Happy-Sad axis again and considering those texts that have been classified in Group G0 (happy):

That percentage of texts with the highest probability value are given a score of 0.
The next percentage of texts with a lower probability are given a score of 1.
The next percentage of texts with a lower probability are given a score of 2.
The next percentage of texts with a lower probability are given a score of 3.
The final percentage of texts are given a score of 4.

All of the texts within that group will then have been given a score. The process is repeated for texts having a probability of falling within group G2 so that these texts are given a score of between 6 and 10.

The mean determination method can determine the scores for each axis for each text using a simpler less computationally intensive method. The scores for the groups are used to define scores for each value alone the axis e.g. if G0 has a score of 3, values 0, 1, 2, and 3 along the axis are assigned a score of 3, and if G1 has a score of 7, values 4, 5, and 6 are assigned a score of 7. This can be likened to plotting a histogram. A mean is then taken of these values to determine the score for the axis. This mean is equivalent to the x-co-ordinate of the histogram's center of gravity.

Retraining/Feedback

Retraining or feedback is an optional procedure that may improve the performance of the classification system (i.e. the certainty of classification) and increase its vocabulary.

Those texts that have been classified by the system with a high probability are applied to the training algorithm.

The confidence of the classification is determined as a moment of inertia M using:

$$M = \sum_{i=0}^{n-1} x_i \, d_i^2$$

where each x is a score for each group, d is the difference of the score to the mean, i is a group index, and n is the number of groups across each axis. Thus the distribution of scores across the groups, provided before the axis determination module 30 determines the mean or uses the spreading function, is used to determine the confidence in the score.

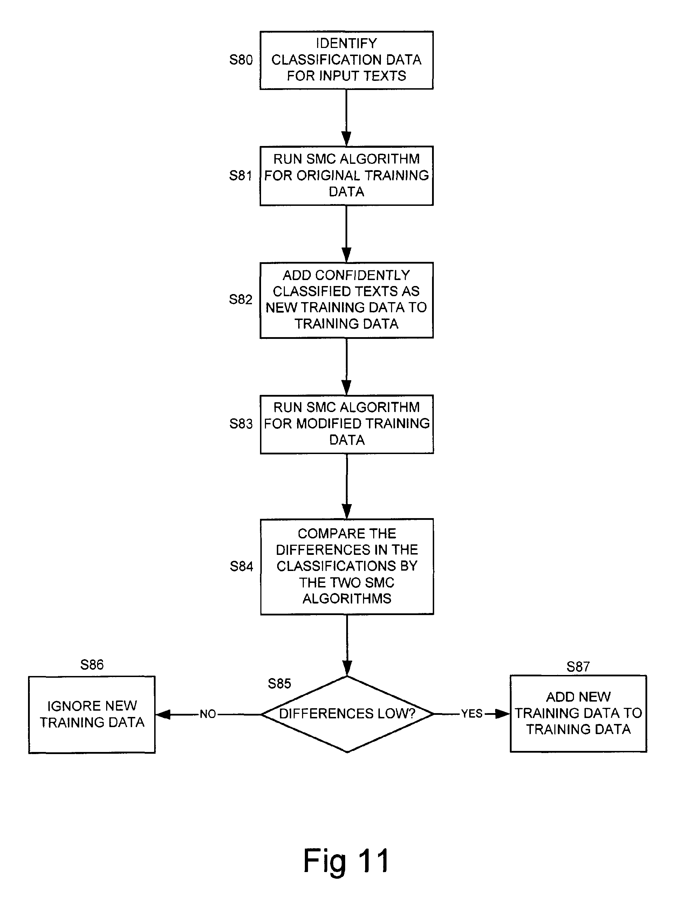

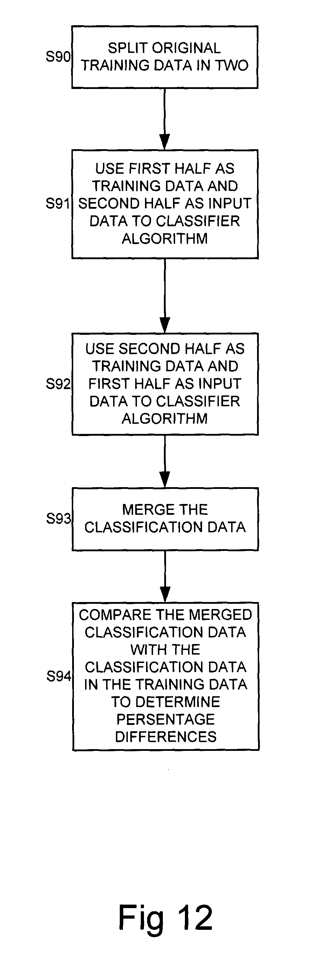

Figure 11 is a flow diagram illustrating the feed back process of this embodiment of the present invention. The process starts in step S80 by identifying texts which have been classified with high confidence. In step S81 an algorithm is performed to test the training data used in the classification process. This algorithm is termed the split-merge-compare algorithm and is illustrated in more detail in figure 12. In step S90 the original training data is split randomly in two. A first half is then used as training data and the second half is used as input data to the classification algorithm as described hereinabove (step S91). Then the process is repeated in reverse, with the second half being used as training data and the first half being used as input data to the classification algorithm (step S92). The classification data resulting from the two classification processes is then merged in step S93 i.e. the scores for the axes for texts generated by the two processes are merged. The merged classification data is then compared with the classification data in the training data (i.e. the classification data determined manually or automatically by the text classification module 2) to determine percentage differences between the scores for the axes. This result in a percentage value for score differences e.g. D0= 12% D1=29% D2=25% D3=20% D3=10% D4=3% D5=1%, where D0 gives the percentage (in this case 12%) of scores having no score difference, D1 gives the percentage (in this case 29%) of scores being different by 1, D2 gives the percentage (in this case 25%) of scores being different by 2, etc. The maximum score difference is 10 since this is the length of each of the score axes and thus the scores can only lie between 0 and 10 i.e. there can only be D0 to D10.

Having determined the differences using the split-merge-compare algorithm (step S81) for the original training data, in step S83 the classifications and word stem data for texts that were determined to give scores of high confidence are added to the original training data (step S82) to provide modified training data. The modified training data is then put through the split-merge-compare algorithm in step S83 as described hereinabove for the original training data to generate difference values D0', D1', D2', D3' etc. The differences generated for the original training data and for the modified training data are then compared in step S84. If the differences are low (step S85) the modified training data is adopted as the new training data for future classifications by the classification process (step S87). If the differences or not low, the original training data is reverted to (step S86).

The determination as to whether the differences are low can either be by determining if the percentage of scores for which there is no score difference D0 is higher or the moment of inertia equation given hereinabove can be used where x is the difference, n is the number of differences i.e. 11 (DO to D10), i is the difference index, d is the percentage value for the differences, and D0 is taken as the mean.

This feedback technique allows the training data to be automatically updated include new vocabulary and to reinforce the classification effectiveness of the system. A particular example would be the name of a new actor or director who becomes associated with a particular type of film (e.g. Almodovar, Van Damme and so on).

Hierarchical classification

In the embodiment described hereinabove, the document is classified according to a flat structure comprising a plurality of qualities or axes with scores lying between opposed extremes. When the structure is used for retrieval, it is necessary for a user to define values for all of the qualities. This can of course be done by default i.e. scores defaulting to a mid range value if not input by the user.

The present invention also allows the qualities or axes to be arranged hierarchically. The structure can encapsulate useful information and can make the classification task simpler. Also the structure can facilitate a quicker more focused retrieval process that the user can navigate through.

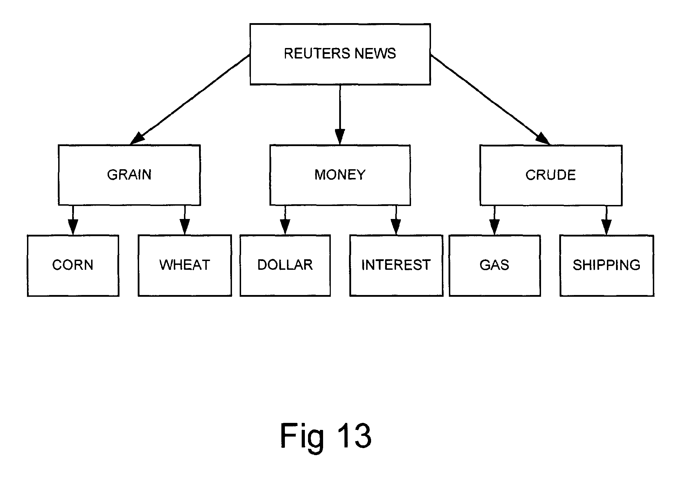

Figure 13 illustrates the hierarchical structure of a classification tree in accordance with an embodiment of the present invention. In this embodiment the qualities or axes have extreme values indicating how much the document is concerned with a topic such as Money. Thus the extremes can be simply YES and NO. This hierarchical structure requires 4 classifiers having 4 different sets of training data. In this embodiment the documents are all from the Reuters news feed. A first set of training data and a first classifier will thus provide 3 qualities or axes for which the documents are given scores by automatic or manual classification. The word stems and word stem sequences in the documents are identified to obtain the training data which will give scores for the 3 axes: Grain, Money and Crude and the associated distribution of word stem and word stem sequence scores across the groups as described above and as illustrated in figure 7. A second set of training data and a second classifier will provide 2 qualities or axes: Corn and Wheat for which a subset of the documents having the highest scores for the Grain classification are given scores by automatic or manual classification. The word stems and word stem sequences in the subset of documents are identified to obtain the training data which will give scores for the 2 axes: Corn and Wheat and the associated distribution of word stem and word stem sequence scores across the groups as described above and as illustrated in figure 7. A third set of training data and a third classifier will provide 2 qualities or axes: Dollar and Interest for which a subset of the documents having the highest scores for the Money classification are given scores by automatic or manual classification. The word stems and word stem sequences in the subset of documents are identified to obtain the training data which will give scores for the 2 axes: Dollar and Interest and the associated distribution of word stem and word stem sequence scores across the groups as described above and as illustrated in figure 7. A fourth set of training data and a fourth classifier will provide 2 qualities or axes: Gas and Shipping for which a subset of the documents having the highest scores for the Crude classification are given scores by automatic or manual classification. The word stems and word stem sequences in the subset of documents are identified to obtain the training data which will give scores for the 2 axes: Gas and Shipping and the associated distribution of word stem and word stem sequence scores across the groups as described above and as illustrated in figure 7. Thus the highest score for one of the qualities or axes will determine the classification assigned e.g. Money and hence the next set of classifications e.g. Dollar and Interest.

It can be seen from the description above that there is a substantial reduction in processing required for the hierarchical classification technique since the sub classifications do not use training data that is not relevant for that classification. Documents are classified in each layer and this is used to select the training data used in the layer below so that only relevant training data is used. For example, articles on the shipping of crude oil are not likely to have any relevance to corn or wheat and thus there is no need to classify the article according to these classifications. The focussing of the training data in the field provides for better accuracy.

The use of the hierarchy also enables the information bearing lexical units to be used for word stemming to be reduced to a selected set. For example, at the first level, only general words need be used e.g. farming, tractor, ship, money etc. At the next level another more focused set of lexical units can be used for the classification process e.g. rate, interest, United States, dollar, etc for the Money classification.

Thus in this embodiment of the present invention, the training data can be stored in a hierarchical manner thus reducing the overall data and facilitating an easily navigable retrieval process.

The Retrieval System

Once a set of texts has been allocated a score on each axis as described above they can be used by a retrieval system. The principle of operation of such a system is straightforward once the texts have been classified. Such a retrieval system is disclosed in co-pending UK patent application number 0002179.0, European patent application number 00310365.2 and US application serial number 09/696,355.

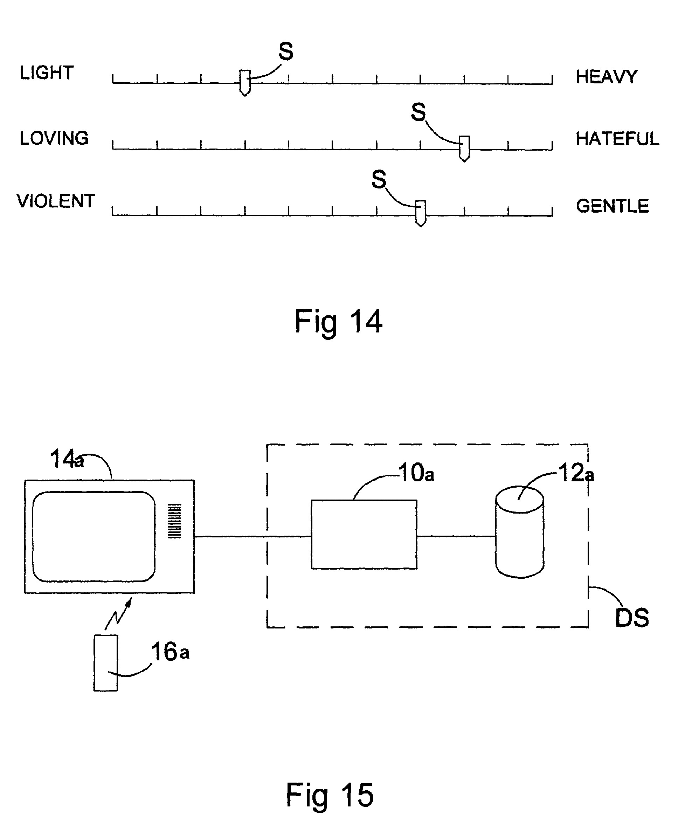

If we take the example of texts representing a synopsis of television programmes, the user may request the retrieval system to locate a programme that meets his particular requirements. One method for so doing is illustrated in Figure 14 of the accompanying drawings. This shows a graphical user interface (GUI) that the user is presented with when he selects a FIND PROGRAMME function on his television set. Only three axes are shown in the Figure for the sake of clarity: Light-Heavy, Loving-Hateful and Violent-Gentle. On each axis is a slider S that can be manipulated by the user using any suitable GUI technique. For example the user may use navigation buttons on his remote control. The UP/DOWN buttons may be used to select a particular axis and once this is done the relevant slider is highlighted. The LEFT/RIGHT buttons may then be used to move the highlighted slider along the axis. Each slider may occupy 11 positions corresponding to the 11 scores per axis described above. Of course other techniques may be employed such as a touch screen or, in the case of a personal computer, a mouse or trackball. In any case the system is intuitive and easy to use without a requirement for any typing (although numeric scores could be entered if desired).

Once the user has adjusted all of the sliders he can press a FIND PROGRAMME button and fuzzy logic is then used to locate a programme that most closely matches his requirements. It is unlikely, of course, that a programme can be found that matches all of the scores he has selected on all axes but a close match or a number of the closest matches can be found and displayed to the user. He can then select one of the options and view the programme using the navigation buttons on his remote control. The techniques for applying fuzzy logic to match the scores of the user with those of the available programmes will be familiar to the skilled person and will not be repeated here. Figure 15 shows a block schematic diagram of such a system. In this arrangement the classification of texts relating to television programmes and the matching of those classifications to user requirements is carried out remotely, for example at the premises of a cable television distributor.

A distributor site DS comprises a processor 10a connected to a database 12a and to a user's television set 14a via a cable. Clearly other communications techniques could be used to communicate with the user. Other features of the distributor site have been omitted for clarity.

A remote control 16a is usable to control a television set 14a. Upon selection by the user a GUI such as that shown in Figure 14 is displayed. Once the user has made his selections, the information is passed to the processor 10a at the DS. The processor 10a then applies fuzzy logic rules to the previously classified programs whose classifications are stored in the database 12a. An option or a set of options are then displayed to the user who can use this to select his viewing. Of course, if the options do not appeal to the user he can amend his selections and request another set of options. This embodiment of the invention provides a classification system based on brief textual descriptions of television programmes (in Europe, for example, such data for all television programmes in all countries is provided by a company called Infomedia in Luxembourg.). Alternative search techniques, be they based on explicit user input or implied learning about user's tastes (or both), may then utilise the data generated to identify a television programme or programmes which most closely meet the user's requirements. For example, the user might wish to view a short but informative programme with a light hearted approach at some point during the evening. He can simply specify the required parameters on each of the relevant axis to obtain a recommendation or set of recommendations for viewing. This system is important (if not vital) when there are hundreds of possible channels to choose from. As a further alternative the system could operate in the user's absence to video record those programmes that best match his preferences.

In another embodiment a news feed is provided via the Internet (or other delivery channel) to a personal computer PC processor on the user's desk. The user has preprogrammed his interests in categories of news that he wishes to have displayed on his PC as soon as they hit the wires. The pre-programming can be explicit using a menu-driven GUI, such as the one described above for example or implicit whereby the system learns the user's preferences from previous behaviour.

The processor in the user's PC then applies the classification algorithm to the incoming data (preferably using fuzzy logic) and places relevant newsflashes on the user's PC screen. This process can run continually in the background without the user being aware of it. As soon as some news relevant to the user's interests (e.g. The Dow Jones index, the Internet, biotechnology etc) is delivered via the news feed, it can be displayed to the user. The user will then give those items of news that are displayed his full attention because he knows that they have been "prefiltered" to match his requirements.

The fuzzy logic system enables inaccuracies in the classification system to be compensated for in the retrieval system. The use of a fuzzy query enables the user to search for and retrieve documents that approximately match the users requirements.

One or more natural language processing (NLP) techniques may be added to embodiments of the invention so as to run in parallel with the techniques described herein.

While claims have been formulated to the present invention the scope of the invention includes any novel feature disclosed herein whether explicitly or implicitly and any generalisation thereof. It also extends to cover the spirit and scope of the principles described herein.

**Claims**

1. Processing apparatus for generating classification data for text, the processing apparatus comprising:

   identifying means for identifying semantic content bearing lexical units in data representing the text to be classified;
   sequence determining means for determining sequences of the identified lexical units; and
   classification data determining means for determining classification data as a score for the text to be classified with respect to each of a plurality of qualities by comparing the determined sequences of the identified lexical units with stored sequences of lexical units for training texts having scores associated therewith for a plurality of qualities.

2. Processing apparatus according to claim 1, wherein including storage means for storing the stored sequences of lexical units as at least one sequence of lexical units starting from each consecutive semantic content bearing lexical unit in data representing training text, and said sequence determining means is adapted to determine at least one sequence of lexical units starting from each consecutive semantic content bearing lexical unit in the text to be classified, and said classification data determining means is adapted to determine the scores by comparing said at least one sequence starting from each consecutive semantic content bearing lexical unit in data representing the text to be classified with said at least one stored sequence starting from each consecutive semantic content bearing lexical unit in data representing the training text.

3. Processing apparatus according to claim 2, wherein said at least one sequence of lexical units comprises a sequence of previous lexical units.

4. Processing apparatus according to claim 2 or claim 3, wherein said at least one sequence of lexical units comprise sequences of 1 to n lexical units, where n is an integer greater than 1.

5. Processing apparatus according to any one of claims 2, 3 or 4, wherein said sequence determining means is adapted to determine sequences of lexical units in which the first lexical unit in said at least one sequence is not a common lexical unit or a modifying lexical unit that modifies the meaning of a subsequent lexical unit, and subsequent lexical units in said at least one sequence can be a modifying lexical unit.

6. Processing apparatus according to any one of claims 2, 3, 4 or 5, wherein said sequence determining means is adapted to determine said at least one sequence of lexical units starting at the beginning of each sentence in the text to be classified so that said at least one sequence of lexical units does not include lexical units from another sentence and sequences of lexical units starting with lexical units at the beginning of sentences can include identifiers in the sequence to identify that there is no word in a position in the sequence.

7. Processing apparatus according to any preceding claim, wherein said at least one sequence of lexical units further includes a single semantic content bearing lexical unit.

8. Processing apparatus according to any preceding claim, wherein said identifying means is adapted to identify semantic content bearing lexical units by rejecting common words, and to stem words to provide the semantic content bearing lexical units as word stems.

**9.** Processing apparatus according to any preceding claim, including storage means storing scores for training texts and sequence scores for sequences of lexical units indicating the occurrence of the sequences in the training texts, wherein said sequence determining means is adapted to determine sequence scores for sequences of lexical units in the text to be classified, and said classification data determining means is adapted to compare the sequence scores for the training text and for the text to be classified to determine the scores for the text to be classified.

**10.** Processing apparatus according to claim 9, wherein said storage means stores the sequence scores associated with scores for the training texts

**11.** Processing apparatus according to claim 10, wherein said storage means stores the sequence scores for groups of scores for the training texts, and said classification data determining means is adapted to determine a group score for each group by comparing the sequence scores for the training text and for the text to be classified, and to determine the scores for the text to be classified from the group scores

**12.** Processing apparatus according to claim 11, wherein the groups of scores comprise a mid range group of mid range scores and at least one other group of scores above and below the mid range group.

**13.** Processing apparatus according to any preceding claim, wherein said classification data determining means is adapted to determine the scores for the text to be classified by attaching more weight to the comparison of longer sequences of lexical units than to shorter sequences of lexical units.

**14.** A method of generating classification data for text, the method comprising:

identifying semantic content bearing lexical units in data representing the text to be classified;
determining sequences of the identified lexical units; and
determining means for determining classification data as a score for the text to be classified with respect to each of a plurality of qualities by comparing the determined sequences of the identified lexical units with stored sequences of lexical units for training texts having scores associated therewith for a plurality of qualities.

**15.** A method according to claim 14, wherein the stored sequences of lexical units are stored as at least one sequence of lexical units starting from each consecutive semantic content bearing lexical unit in data representing training text, at least one sequence of lexical units is determined starting from each consecutive semantic content bearing lexical unit in the text to be classified, and the scores are determined by comparing said at least one sequence starting from each consecutive semantic content bearing lexical unit in data representing the text to be classified with said at least one stored sequence starting from each consecutive semantic content bearing lexical unit in data representing the training text.

**16.** A method according to claim 15, wherein said at least one sequence of lexical units comprises a sequence of previous lexical units.

**17.** A method according to claim 15 or claim 16, wherein said at least one sequence of lexical units comprise sequences of 1 to n lexical units, where n is an integer greater than 1.

**18.** A method according to any one of claims 15, 16 or 17, wherein sequences of lexical units are determined in which the first lexical unit in said at least one sequence is not a common lexical unit or a modifying lexical unit that modifies the meaning of a subsequent lexical unit, and subsequent lexical units in said at least one sequence can be a modifying lexical unit.

**19.** A method according to any one of claims 15, 16, 17 or 18, wherein said at least one sequence of lexical units is determined starting at the beginning of each sentence in the text to be classified so that said at least one sequence of lexical units does not include lexical units from another sentence and sequences of lexical units starting with lexical units at the beginning of sentences can include identifiers in the sequence to identify that there is no word in a position in the sequence.

**20.** A method according to any one of claims 14 to 19, wherein said at least one sequence of lexical units further includes a single semantic content bearing lexical unit.

**21.** A method according to any one of claims 14 to 20, wherein semantic content bearing lexical units are identified by rejecting common words, and words are stemmed to provide the semantic content bearing lexical units as word stems.

22. A method according to any one of claims 14 to 21, including storing scores for training texts and sequence scores for sequences of lexical units indicating the occurrence of the sequences in the training texts, wherein sequence scores for sequences of lexical units in the text to be classified are determined, and the sequence scores for the training text are compared to the sequenced scores for the text to be classified to determine the scores for the text to be classified.

23. A method according to claim 22, wherein the sequence scores associated with scores for the training texts are stored.

24. A method according to claim 23, wherein the sequence scores for groups of scores for the training texts are stored, a group score is determined for each group by comparing the sequence scores for the training text and for the text to be classified, and the scores for the text to be classified are determined from the group scores

25. A method according to claim 24, wherein the groups of scores comprise a mid range group of mid range scores and at least one other group of scores above and below the mid range group.

26. A method according to any one of claims 14 to 25, wherein the scores for the text to be classified are determined by attaching more weight to the comparison of longer sequences of lexical units than to shorter sequences of lexical units.

27. Processing apparatus for generating classification data for text, the processing apparatus comprising:

program memory storing processor readable program code; and
a processor for reading and executing the program code;

wherein the program code comprises code to control the processor to:

identify semantic content bearing lexical units in data representing the text to be classified;
determine sequences of the identified lexical units; and
determine means for determining classification data as a score for the text to be classified with respect to each of a plurality of qualities by comparing the determined sequences of the identified lexical units with stored sequences of lexical units for training texts having scores associated therewith for a plurality of qualities.

28. Processing apparatus according to claim 27, including storage storing the stored sequences of lexical units as at least one sequence of lexical units starting from each consecutive semantic content bearing lexical unit in data representing training text, wherein the program code comprises code to control the processor to determine at least one sequence of lexical units starting from each consecutive semantic content bearing lexical unit in the text to be classified, and to determine the scores by comparing said at least one sequence starting from each consecutive semantic content bearing lexical unit in data representing the text to be classified with said at least one stored sequence starting from each consecutive semantic content bearing lexical unit in data representing the training text.

29. Processing apparatus according to claim 28, wherein said at least one sequence of lexical units comprises a sequence of previous lexical units.

30. Processing apparatus according to claim 28 or claim 29, wherein said at least one sequence of lexical units comprise sequences of 1 to n lexical units, where n is an integer greater than 1.

31. Processing apparatus according to any one of claims 28, 29 or 30, wherein the program code comprises code to control the processor to determine sequences of lexical units in which the first lexical unit in said at least one sequence is not a common lexical unit or a modifying lexical unit that modifies the meaning of a subsequent lexical unit, and subsequent lexical units in said at least one sequence can be a modifying lexical unit.

32. Processing apparatus according to any one of claims 28, 29, 30 or 31, wherein the program code comprises code to control the processor to determine said at least one sequence of lexical units starting at the beginning of each sentence in the text to be classified so that said at least one sequence of lexical units does not include lexical units from another sentence and sequences of lexical units starting with lexical units at the beginning of sentences can include identifiers in the sequence to identify that there is no word in a position in the sequence.

33. Processing apparatus according to any one of claims 27 to 32, wherein said at least one sequence of lexical units further includes a single semantic content bearing lexical unit.

34. Processing apparatus according to any one of claims 27 to 33, wherein the program code comprises code to control the processor to identify semantic content bearing lexical units by rejecting common words, and words are stemmed to provide the semantic content bearing lexical units as word stems.

35. Processing apparatus according to any one of claims 27 to 34, wherein the program code comprises code to control the processor to store scores for training texts and sequence scores for sequences of lexical units indicating the occurrence of the sequences in the training texts, to determine sequence scores for sequences of lexical units in the text to be classified, and to compare the sequence scores for the training text to the sequenced scores for the text to be classified to determine the scores for the text to be classified.

36. Processing apparatus according to claim 35, wherein the sequence scores associated with scores for the training texts are stored.

37. Processing apparatus according to claim 36, wherein the program code comprises code to control the processor to store the sequence scores for groups of scores for the training texts, to determine a group score for each group by comparing the sequence scores for the training text and for the text to be classified, and to determine the scores for the text to be classified from the group scores

38. Processing apparatus according to claim 37, wherein the groups of scores comprise a mid range group of mid range scores and at least one other group of scores above and below the mid range group.

39. Processing apparatus according to any one of claims 27 to 38, wherein the program code comprises code to control the processor to determine the scores for the text to be classified by attaching more weight to the comparison of longer sequences of lexical units than to shorter sequences of lexical units.

40. Processing apparatus for generating classification data for text, the processing apparatus comprising:

identifying means for identifying semantic content bearing lexical units in data representing the text to be classified; and
classification data determining means for determining classification data as a score for the text to be classified with respect to each of a plurality of qualities by comparing the identified lexical units with stored lexical units having a distribution of lexical scores associated therewith for each of a plurality of qualities.

41. Processing apparatus according to claim 40, including storage means storing said distribution of lexical scores for each of the plurality of qualities, the distribution having been obtained from training data.

42. Processing apparatus according to claim 40 or claim 42, wherein said classification data determining means is adapted to determine the score for the text to be classified by statistical analysis of the result of the comparison.

43. Processing apparatus according to any one of claims 40 to 42, including sequence determining means for determining sequences of the identified lexical units; wherein said classification data determining means is adapted to determine the score by comparing the determined sequences of the identified lexical units with stored sequences of lexical units for training texts having score distributions associated therewith for the plurality of qualities.

44. Processing apparatus for generating classification data for text, the processing apparatus comprising:

program memory storing processor readable program code; and
a processor for reading and executing the program code;

wherein the program code comprises code to control the processor to:

identify semantic content bearing lexical units in data representing the text to be classified; and

determine classification data as a score for the text to be classified with respect to each of a plurality of qualities by comparing the identified lexical units with stored lexical units having a distribution of lexical scores associated therewith for each of a plurality of qualities.

**45.** Processing apparatus according to claim 44, including storage storing said distribution of lexical scores for each of the plurality of qualities, the distribution having been obtained from training data.

**46.** Processing apparatus according to claim 44 or claim 45, wherein the program code comprises code to control the processor to determine the score for the text to be classified by statistical analysis of the result of the comparison.

**47.** Processing apparatus according to any one of claims 44 to 46, wherein the program code comprises code to control the processor to determine sequences of the identified lexical units; and to determine the score by comparing the determined sequences of the identified lexical units with stored sequences of lexical units for training texts having score distributions associated therewith for the plurality of qualities.

**48.** A method of generating classification data for text, the method comprising:

identifying semantic content bearing lexical units in data representing the text to be classified; and
determining classification data as a score for the text to be classified with respect to each of a plurality of qualities by comparing the identified lexical units with stored lexical units having a distribution of lexical scores associated therewith for each of a plurality of qualities.

**49.** A method according to claim 48, including storing said distribution of lexical scores for each of the plurality of qualities, the distribution having been obtained from training data.

**50.** A method according to claim 48 or claim 49, wherein the score for the text to be classified is determined by statistical analysis of the result of the comparison.

**51.** A method according to any one of claims 48 to 50, including determining sequences of the identified lexical units; wherein the score is determined by comparing the determined sequences of the identified lexical units with stored sequences of lexical units for training texts having score distributions associated therewith for the plurality of qualities.

**52.** Processing apparatus for generating classification data in a hierarchical structure for text, the processing apparatus comprising:

the processing apparatus according to any one of claims 1 to 13 or 40 to 43;
wherein said classification data determining means is adapted select a quality having the highest score arid to repeat the determination of a score for a set of qualities dependent upon the selected quality.

**53.** Processing apparatus according to claim 52, wherein said classification data determining means is adapted to use a sub set of the stored training texts dependant upon the selected quality for the repeated determination.

**54.** A method of generating classification data in a hierarchical structure for text, the method comprising:

the method of any one of claims 14 to 26 or 48 to 51; and
selecting a quality having the highest score and repeating the determination of a score for a set of qualities dependent upon the selected quality.

**55.** A method according to claim 54, wherein a sub set of the stored training texts dependant upon the selected quality is used for the repeated determination

**56.** Processing apparatus according to any one of claims 1 to 13 or 40 to 43, including training data modifying means for modifying the training data using the classification data if confidence in the classification is high.

**57.** A method of any one of claims 14 to 26 or 48 to 51, including modifying the training data using the classification data if confidence in the classification is high.

**58.** An automatic text classification system comprising:

means for extracting word stems and word stem sequences from data representing a text to be classified;
means for calculating a probability value for the text to be classified with respect to each of a plurality of qualities based on a correlation between (i) the extracted word stems and word stem sequences and (ii) predetermined training data.

**59.** The automatic text classification system according to claim 58, wherein each quality is represented by an axis whose two end points correspond to mutually exclusive characteristics.

**60.** The automatic text classification system according to claim 59, wherein the probability value with respect to each of the plurality of qualities is converted into a score on each axis indicating a likelihood of the text having one or the other of the mutually exclusive characteristics.

**61.** The automatic text classification system according to any one of claims 58 to 60, wherein the training data is derived from a plurality of training texts that have been pre-classified with respect to each of the plurality of qualities, and the training data comprises a distribution value of each word stem and each word stem sequence in each of the plurality of training texts with respect to each of the plurality of qualities.

**62.** The automatic text classification system according to claim 61, wherein:

each quality is represented by an axis that is divided into a plurality of groups and whose two end points correspond to mutually exclusive characteristics;
each of the training texts has been pre-classified into one of the groups on each axis;
the training data comprises a database of, for each group on each axis, the distribution value of each word stem and word stem sequence in each training text with respect to the one group on each axis into which each training text has been pre-classified;
the distribution values represent a probability of each word stem and word stem sequence existing in a group on a given axis; and
the probability values of the text to be classified represent a probability of the text being classified in each group on each axis.

**63.** The automatic text classification system according to claim 62, wherein each of the training texts has been pre-classified with a specific score on each axis, and each group on each axis comprises a predetermined range of scores.

**64.** The automatic text classification system according to claim 63, wherein the training texts are selected so that the pre-classified scores are distributed along each axis between a Bell curve and a flat distribution.

**65.** The automatic text classification system according to claim 63 or claim 64, wherein:

each axis is divided into a first group, a neutral second group, and a third group; and
the neutral second group with respect to the pre-classification of the training texts is broader than the neutral second group with respect to the text to be classified, so that the probability values of the text to be classified are more likely to be converted into scores which fall on an appropriate side of each axis.

**66.** The automatic text classification system according to any one of the claims 58 to 65, wherein:

each word stem is a main stem word that is not a common word;
a modifying word is a common word that adds meaning to a main stem word; and
each word stem sequence comprises a main stem word and one or more previous words that are either modifying words or other main stem words.

**67.** The automatic text classification system according to claim 66, wherein the probability values are calculated such that a correlation between an extracted triple word stem sequence with the training data is more heavily weighted than a correlation between an extracted double word stem sequence with the training data, and such that a correlation between an extracted double word stem sequence with the training data is more heavily weighted than a correlation between a single extracted word stem with the training data.

**68.** A system for producing training data comprising:

means for extracting word stems and word stem sequences from each of a plurality of training texts that have been pre-classified with respect to each of a plurality of qualities; and
means for calculating a distribution value of each extracted word stem and word stem sequence in each training text with respect to each of the plurality of qualities.

**69.** The system for producing training data according to claim 68, wherein each quality is represented by an axis whose two end points correspond to mutually exclusive characteristics.

**70.** The system for producing training data according to claim 68, wherein:

each quality is represented by an axis that is divided into a plurality of groups and whose two end points correspond to mutually exclusive characteristics;
each of the training texts has been pre-classified into one of the groups on each axis;
the training data comprises a database of, for each group on each axis, a distribution value of each word stem and word stem sequence in each training text with respect to the one group on each axis into which each training text has been pre-classified; and
the distribution values represent a probability of each word stem and word stem sequence existing in a given group on a given axis.

**71.** The system for producing training data according to claim 70, wherein each of the training texts has been pre-classified with a specific score on each axis, and each group on each axis comprises a predetermined range of scores.

**72.** The system for producing training data according to claim 71, wherein the training texts are selected so that the pre-classified scores are distributed along each axis between a Bell curve and a flat distribution.

**73.** The system for producing training data according to claim 68, wherein:

each word stem is a main stem word that is not a common word;
a modifying word is a common word that adds meaning to a main stem word; and
each word stem sequence comprises a main stem word and one or more previous words that are either modifying words or other main stem words.

**74.** The system for producing training data according to claim 68, further comprising:

means for, after a plurality of new texts have been classified with respect to the plurality of qualities using the training data, selecting a number of the new texts that have been classified with a predetermined degree of probability with respect to at least one of the plurality of qualities;
means for extracting word stems and word stem sequences from each of the selected new texts; and
means for one of (i) recalculating the distribution value of each extracted word stem and word stem sequence which is already present in the training data, and (ii) calculating an initial distribution value of each extracted word stem and word stem sequence which is not already present in the training data.

**75.** A retrieval system comprising:

means for accessing a data store comprising a plurality of word stems and word stem sequences that have been extracted from a plurality of texts, a plurality of identifiers associating each word stem and word stem sequence with at least one of the plurality of texts, and correlation data between (i) each word stem and word stem sequence and (ii) each of a plurality of qualities in terms of which the plurality of texts have been classified;
means for receiving user preference data in terms of at least one of the plurality of qualities;
means for identifying word stems and word stem sequences corresponding to the user preference data based on the correlation data stored in the data store using fuzzy logic; and
means for identifying at least one of the plurality of texts that best matches the user preference data based on the identified word stems and word stem sequences and the plurality of identifiers stored in the data store.

**76.** The retrieval system according to claim 75, wherein each quality is represented by an axis whose two end points represent mutually exclusive characteristics.

77. The retrieval system according to claim 75, wherein:

each quality is represented by an axis that is divided into a plurality of groups and whose two end points correspond to mutually exclusive characteristics;
each of the plurality of texts has been classified into one of the groups on each axis;
the correlation data comprises, for each group on each axis, a distribution value of each word stem and word stem sequence in each text with respect to the one group on each axis into which each text has been classified; and
the distribution values represent a probability of each word stem and word stem sequence existing in a given group on a given axis.

78. The retrieval system according to claim 77, wherein:

each word stem is a main stem word that is not a common word;
a modifying word is a common word that adds meaning to a main stem word; and
each word stem sequence comprises a main stem word and one or more previous words that are either modifying words or other main stem words.

79. The retrieval system according to claim 75, further comprising a graphical user interface for enabling input of the user preference data.

80. A system for producing training data comprising:

means for identifying lexical units and lexical unit sequences from each of a plurality of training texts that have been pre-classified with respect to each of a plurality of qualities; and
means for calculating a distribution value of each identified lexical unit and lexical unit sequence in each training text with respect to each of the plurality of qualities.

81. A method of producing training data comprising:

identifying lexical units and lexical unit sequences from each of a plurality of training texts that have been pre-classified with respect to each of a plurality of qualities; and
calculating a distribution value of each identified lexical unit and lexical unit sequence in each training text with respect to each of the plurality of qualities

82. A carrier medium carrying computer readable code for controlling a processor to carry out the method of any one of claims 14 to 26, 48 to 51, 54, 55 or 57.

83. A carrier medium carrying computer readable code for controlling a computer to function as the system as claimed in any one of the claims 58 to 79.

Fig 1

LIGHT  0 1 2 3 4 5 6 7 8 9 10  HEAVY

LOVING  0 1 2 3 4 5 6 7 8 9 10  HATEFUL

VIOLENT  0 1 2 3 4 5 6 7 8 9 10  GENTLE

G0    G1    G2

# Fig 2

ND

FD

# Fig 3

S1 | START HERE
Base Weight = 1

S2 | For each Feed Word: fw on both extremes

S3 | Set Weight(FW) to the Base Weight

S4 | Get the score for each document on each extreme

S5 | Get documents with significantly higher score in one extreme than the other

S6 | For each extreme, get the most frequent, non-common words, which have not been used before and do not appear in the other extremes word set. Thse are the new Feed Words for each extreme

S7 | Set Base Weight= Base Weight * 0.8

S8 | Is Base weight lower than threshold (0.5)?

NO

YES

S9 | Any documents without a score are set into the middle as having no relevance.

S10 | Distribute the other documents along the axes in relation to the relative scores and word frequencies. i.e. if an extreme has more words in it then there will be more documents in that extreme.

# Fig 4a

S20 | Get the new synonyms of FW: Syn(FW)

S21 | For all members of Syn(FW) set their weight to 0.8 * Base Weight

S22 | For All Documents where either FW or a member of Syn(FW) occurs

S23 | Score(Document,extreme) = Sum for each occurrence of FW or member of Syn(FW)

S24 | X=Weight(current word)

S25 | Is the previous word a modifying word? —NO→ S26 | score=score + X

YES

S27 | X=Weight (Previous Word) *X

S30 | Add X to opposite extreme's score ←Negative— S28 | Is it a positive or negative modifier? —Positive→ S29 | Add X to current extreme's score

# Fig 4b

S31 | Get the new antonyms of FW: Ant(FW)

S32 | For all members of Ant(FW) set their weight to 0.8 * Base Weight

S33 | For All Documents where a member of Ant(FW) occurs

S34 | Score(Document, other extreme) = Sum for each occurrence of Ant(FW)

S35 | X=Weight(current word)

S36 | Is the previous word a modifying word? — NO → S37 | score = score + X

YES

S38 | X=Weight (Previous Word) *X

S41 | Add X to opposite extreme's score ← Positive — S39 | Is it a positive or negative modifier? — Negative ► S40 | Add X to current extreme's score

## Fig 4c

| AXIS NO. | SCORE |
|----------|-------|
| 1 | 4 |
| 2 | 9 |
| 3 | 5 |
| . | . |
| . | . |
| . | . |
| n | 1 |

CM

TT

ST

# Fig 5

S50 START

S51 ALLOCATE
w,pw,p2w

S52 w A MODIFYING WORD? — YES

NO

S57 END OF TEXT? — YES

NO

S53 STEMMING

S58 END

S54 INCREMENT COUNT
FOR w IN DATA
STORE

S55 INCREMENT COUNT
FORw, pw IN DATA
STORE

S56 INCREMENT COUNT
FOR w, pw, p2w IN
DATA STORE

Fig 6

| GROUP / AXIS | G0 | G1 | G2 |
|---|---|---|---|
| 1 | | | |
| 2 | | | |
| 3 | | | |
| 4 | | | |
| 5 | | | |

| w, pw, p2w | Count | dVal |
|---|---|---|
| happi | 5 | |
| happi, very | 2 | |
| happi, very, very | 1 | |
| lov | 3 | |
| | | |
| | | |
| | | |

# Fig 7

```
                              ┌──────────────┐
                         S60  │  Determine   │
                              │  Axis Name   │
                              └──────┬───────┘
                                     │
                                     ▼
    S62                              S61                              S63
┌──────────────────┐         ┌──────────────┐         ┌──────────────────────┐
│Increase word stem│         │    Does      │         │  Add word stem to    │
│count to 3*(Maximum│◄─YES──┤  axis name    ├──NO►    │  group's data with   │
│ word stem count) │         │ word stem     │         │      count =         │
└────────┬─────────┘         │exist in correct│        │ 3*(Maximum word      │
         │                   │    group?     │         │   stem count)        │
         │                   └──────────────┘         └──────────┬───────────┘
         │                                                       │
         │              S64  ┌──────────────┐                    │
         │                   │   Get all    │                    │
         └──────────────────►│  synonyms for │◄──────────────────┘
                             │     name     │
                             └──────┬───────┘
                                    │
                                    ▼
                    ┌────────────────────────────────┐
                    │ Add synonyms to training data   │
               S65  │with a score of 0.8 of the score for│
                    │          the name              │
                    └────────────────────────────────┘
```

# Fig 8

S71 | For each stem: s
on each axis: a

S72 — Is one group's
count for the prominent word
stem at least twice every other groups count
and is that count
high enough? —NO→ S73

Do not add
synonyms to
training data

YES

S74 | Get synonyms for
shortest word that
stemmed to 's'

S75 | Add these synonyms to
training data for group with a
score of 0.8 of the score for
the prominent word

# Fig 9

```
                              ┌─────────────┐  20
                              │ TEXT STORE  │
                              └──────┬──────┘
                                     │
                                     ▼
                              ┌─────────────┐  21        ┌─────────────┐  22
                              │PREPROCESSING│◄───────────│ COMMON WORD │
                              │   MODULE    │            │    STORE    │
                              └──────┬──────┘            └─────────────┘
                                     │
                                     ▼
                              ┌─────────────┐  23        ┌─────────────┐  24
                              │WORD STEM AND│            │MODIFIER WORD│
                              │  WORD STEM  │◄───────────│    STORE    │
                              │  SEQUENCE   │            └─────────────┘
                              │ IDENTIFIER  │
                              └──────┬──────┘
                                     │
                                     ▼
                              ┌─────────────┐  25
                              │ STEM COUNT  │
                              │ ACCUMULATOR │
                              └──────┬──────┘
                                     │
                                     ▼
                              ┌─────────────┐  26
                              │    SCORE    │
                              │ DETERMINING │
                              │   MODULE    │
                              └──────┬──────┘
                                     │
   ┌─────────────┐  28               ▼
   │TRAINING DATA│            ┌─────────────┐  27
   │    STORE    │            │  DATA STORE │
   └──────┬──────┘            └──────┬──────┘
          │                          │
          │     ┌─────────────┐  29  │
          └────►│ GROUP SCORE │◄─────┘
                │ ACCUMULATOR │
                └──────┬──────┘
                       │
                       ▼
                ┌─────────────┐  30
                │  AXIS SCORE │
                │DETERMINATION│
                │   MODULE    │
                └─────────────┘
```

# Fig 10

**Fig 11**

```
S90   SPLIT ORIGINAL
      TRAINING DATA IN TWO

              │
              ▼

      USE FIRST HALF AS
      TRAINING DATA AND
S91   SECOND HALF AS INPUT
      DATA TO CLASSIFIER
      ALGORITHM

              │
              ▼

      USE SECOND HALF AS
      TRAINING DATA AND
S92   FIRST HALF AS INPUT
      DATA TO CLASSIFIER
      ALGORITHM

              │
              ▼

      MERGE THE
S93   CLASSIFICATION DATA

              │
              ▼

      COMPARE THE MERGED
      CLASSIFICATION DATA
      WITH THE
      CLASSIFICATION DATA
S94   IN THE TRAINING DATA
      TO DETERMINE
      PERSENTAGE
      DIFFERENCES
```

# Fig 12

EP 1 154 358 A2

Fig 13

39

LIGHT ———S——— HEAVY

LOVING ——S—— HATEFUL

VIOLENT ——S—— GENTLE

# Fig 14

14a 10a 12a 16a DS

# Fig 15